(19) Europäisches Patentamt
European Patent Office
Office européen des brevets

(11) EP 2 514 316 B1

(12) EUROPEAN PATENT SPECIFICATION

(45) Date of publication and mention of the grant of the patent:
**08.01.2014 Bulletin 2014/02**

(21) Application number: **12176801.4**

(22) Date of filing: **13.09.2007**

(51) Int Cl.:
*A01P 7/00* (2006.01) *A01N 25/10* (2006.01)
*A01N 25/04* (2006.01) *A01N 43/36* (2006.01)
*A01N 47/02* (2006.01) *A01N 47/34* (2006.01)
*A01N 53/00* (2006.01) *A01N 25/00* (2006.01)

(54) **Pesticide composition**

Pestizidzusammensetzung

Composition de pesticide

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL HR MK**

(30) Priority: **14.09.2006 US 844469 P**

(43) Date of publication of application:
**24.10.2012 Bulletin 2012/43**

(62) Document number(s) of the earlier application(s) in accordance with Art. 76 EPC:
**07820189.4 / 2 066 180**

(73) Proprietor: **BASF SE**
**67056 Ludwigshafen (DE)**

(72) Inventors:
- **Taranta, Claude**
**76297 Stutensee (DE)**
- **Bork, Thomas**
**67593 Westhofen (DE)**
- **Meier, Wolfgang**
**67117 Limburgerhof (DE)**
- **Wilhelm, Ronald**
**65719 Hofheim (DE)**
- **Bratz, Matthias**
**67133 Maxdorf (DE)**
- **Holmes, Keith A.**
**Cary, NC North Carolina 27519 (US)**
- **Cazeneuve, Eric**
**33115 Pyla sur Mer (FR)**
- **Oloumi-Sadeghi, Hassan**
**Raleigh, NC North Carolina 27614 (US)**

(56) References cited:
**WO-A-89/12450 WO-A-03/075966**

EP 2 514 316 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to novel pesticide compositions in the form of a gel material or a solid material which are suitable for combating arthropod pests, in particular insects.

Arthropod pests and in particular pests from the classes of insects and arachnids destroy growing and harvested crops and attack wooden dwelling and commercial structures, causing large economic loss to the food supply and to property. The may also act as vectors for human, animal and plant diseases and cause hygienic problems. Therefore, much effort has been spent to provide methods for effective pest control. Most of these methods rely on the application of organic compounds which interfere with the metabolism of the pest to be controlled. For effective control it is required that the pest gets into contact with or even ingests the active compound or a metabolite thereof. Therefore, it is required that the active organic compound is formulated and applied in a manner that ensures contact of the pest with the active compound or uptake of the active compound by the pest to be controlled.

In plant protection, pesticide compounds are mostly applied as aqueous spray broth or as dusts in order to achieve uniform distribution of the pesticide compound. The aqueous spray liquor is generally obtained by diluting a suitable pesticide concentrate formulation. Since most of the pesticide compounds are water insoluble, the concentrate formulations contain considerable amounts of surfactants. Due to the presence of surfactants rain may leach out the pesticide compound which results in a loss of activity and/or effectiveness.

Other application forms of pesticide compounds include solid or gel-like formulations which are applied directly to the locus where the pest is expected to occur in order to achieve ingestion or contact of pesticide compound with/by the pest to be controlled. Naturally, the applied formulations are subjected to climatic conditions which often lead to an aging of the formulation and a loss of effectiveness.

WO 91/07972 describes gel-type bait formulations for combating insects which comprise water, an insecticidally active ingredient and an effective amount of carrageenan for causing the water and the insecticidally active ingredient to form a gel.

WO 97/11602 discloses gel baits for controlling insects, comprising a hydration-gellable substance and an active ingredient selected from the group of 1-arylpyrazoles. The gellable substance is selected from gellan gum, carrageenan, agar agar, gelatine, jelutong gum, xanthan gum, locust gum, polysaccharide gums.

WO 2006/055275 discloses a gel formulation for combating flies containing one or more neonicotinoids, one or more gelling agents and one or more attractants, the gel having a Brookfield yield value between 50 and 1000 and a Brookfield viscosity between 20000 and 200000 mPa.s. Starches, gellan gum, jelutong gum, carrageenan gum, agar agar, casein, gelatine, carob gum (locust gum), xanthan gum, polysaccharide gum, phycocolloids, polyacrylate polymers, semisynthetic cellulose derivatives such as carboxymethyl-cellulose, polyvinyl alcohol, carboxy vinylates, bentonites, silicates and colloidal silica are suggested as gelling agents, with particular preferences given to xanthan gum and water-soluble polyacrylate polymers of the Rhodopol G and Carbopol EZ-2 type.

The activity of the aforementioned gel formulations is not satisfactory, in particular the long-time activity, since upon aging of the formulation a considerable loss of effectiveness occurs.

WO89/12450 discloses insecticidal delivery compositions for controlling a population of terrestrial insects or pests comprising at least one superabsorbent polymer which is capable of absorbing over 100 times of its weight in water and at least one insecticidal or pesticidal compound. The superabsorbent polymers serve for incorporation or encapsulation of the pesticidal compound. This document does not address the problem of aging of directly applicable formulations nor the problem of leaching when the pesticide compound is applied as a sprayable liquor. Moreover, the compositions disclosed in WO89/12450 are not satisfactory with regard to these problems.

DE 10124297 discloses formulations of active compounds for plant protection comprising superabsorbent polymers, which provide a reduced phytotoxicity of the active compound and thus are suitable for use in nutrient media for plants. The formulations are obtained by kneading the superabsorbent polymer and the active ingredient in the presence of water. The effectiveness of these formulations is not entirely satisfactory. This document does not address the problems associated with leaching and aging.

DE 10157350 discloses formulations of active compounds comprising superabsorbent polymers which are obtained by kneading the superabsorbent polymer and the active ingredient in the presence of water. The tested formulations contain fungicides. The effectiveness of these compositions is not entirely satisfactory. This document does not address the problems associated with leaching and aging.

It is an object of the present invention to provide a pesticidal composition which can be applied directly or as an aqueous spray liquor and which overcomes the problems of prior art. In particular, the compositions should provide an increased activity of the pesticide compound and/or reduce aging or leaching.

It was surprisingly found that these and further objects can be achieved by pesticide compositions in the form of a gel or a solid which besides at least one pesticide compound contain from 0.5 to 20% by weight of at least one superabsorbent polymer P having an absorption capacity for deionised water of least 100 g/1 g of polymer P, from 5 to 94.5% by weight of at least one filler material, different from water, and from 5 to 94.5% by weight of water, wherein the

carrier material together with the superabsorbent polymer P and with the water provides the pesticide composition with a gel-like or solid texture.

Therefore, the invention relates to a pesticide composition in the form of of a ready to use gel which contains

i) 0.02 to 5% by weight of at least one pesticide compound which is effective against arthropod pest,
ii) 0.5 to 5% by weight of at least one superabsorbent polymer P having an absorption capacity for deionised water of at least 100 g per 1 g of polymer P, and
iii) 20 to 79.5% by weight of at least one filler material different from water, and
iv) 15 to 74.5% by weight of water,
wherein the % by weight are based on the total weight of the composition and wherein the filler material comprise a hydrophobic component, which is selected from natural oils and fats, fatty acids, fatty alcohols and mixtures thereof, and where the filler also comprises an attractant.

The present invention also relates to the use of the pesticide compositions as described herein for combating arthropod pests and to a method for combating arthropod pests, which comprises applying a gel composition as defined herein either directly or as an aqueous dilution to a location where the arthropod pest gets into contact with said composition.

The compositions of the present invention have a solid or gel-like texture. The texture of the composition is primarily provided by coaction of the filler material together with the superabsorbent polymer P and the water present in the composition. The compositions of the present invention provide a superior long-lasting pesticidal activity, in particular in comparison with conventional gel-type or solid formulations. Moreover, they have a higher activity in comparison with conventional formulations of pesticide compounds and thus allow a reduction of the application rate of the pesticide compound. Moreover, they show a better storage stability in comparison with conventional liquid formulations. In particular they do not show separation of active material upon storage.

According to the invention, the pesticide composition comprises at least one pesticide compound, which is active against arthropod pest. Generally, the pesticide compound is a non-polymeric organic compound having a molecular weight ranging from 150 to 1000 Dalton. Suitable pesticide compounds may be solid or liquid at room temperature.

The pesticide composition according to the invention preferably contains at least one active compound, e.g. 1, 2, 3 or 4 different active compounds, which is (are) active against at least one arthropod pest, in particular against at least one insect species. Of course, the compounds may be chosen in a manner to achieve activity against more than one insect species.

Pesticides compounds which are suitable for the compositions of the present invention, include but are not limited to:

A.1. Organo(thio)phosphates: e.g. acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;

A.2. Carbamates: e.g. alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;

A.3. Pyrethroids: e.g. allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin;

A.4. Growth regulators: a) chitin synthesis inhibitors: e.g. benzoylureas: chlorfluazuron, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: e.g. halofenozide, methoxyfenozide, tebufenozide, azadirachtin; c) juvenoids: e.g. pyriproxyfen, methoprene, fenoxycarb; d) lipid biosynthesis inhibitors: e.g. spirodiclofen, spiromesifen or spirotetramat;

A.5. Nicotinic receptor agonists/antagonists compounds (nicotinoid insecticides or neonicotinoids): e.g. clothianidin, dinotefuran, imidacloprid, thiamethoxam, nitenpyram, acetamiprid, thiacloprid or the thiazol compound of formula P1

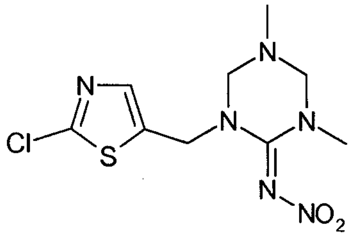

(P1)

A.6. GABA antagonist compounds: e.g. acetoprole, endosulfan, ethiprole, fipronil, vaniliprole, pyrafluprole, pyriprole, or the phenylpyrazole compound of formula P2 (5-amino-3-(aminothiocarbonyl)-1-(2,6-dichloro-4-trifluoromethyl-phenyl)-4-(trifluoromethylsulfinyl)-pyrazole)

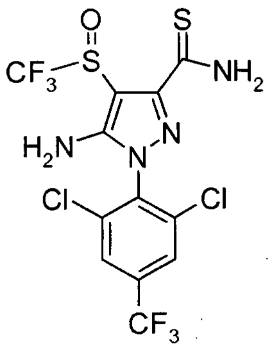

(P2)

and compounds of the formula P5 as described hereinafter, in particular the compounds of the formulae P5a and P5b;

A.7. Macrocyclic lactone insecticides: abamectin, emamectin, milbemectin, lepimectin, spinosad, the compound of formula P3 (CAS No. 187166-40-1)

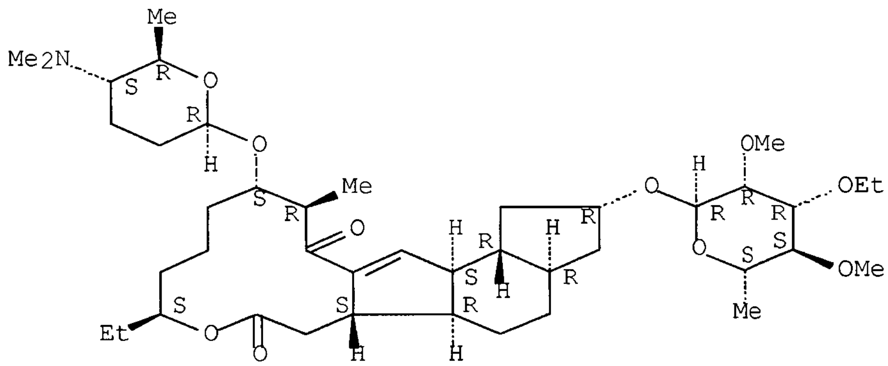

(P3),

A.8. Mitochondrial complex I electron transport inhibitors (METI I compounds): e.g. fenazaquin, pyridaben, tebufenpyrad, tolfenpyrad, flufenerim;

A.9. Mitochondrial complex II and/or complex III electron transport inhibitors (METI II and III compounds): e.g. acequinocyl, fluacyprim, hydramethylnon;

A.10. Uncoupler compounds: e.g. chlorfenapyr;

A.11. Oxidative phosphorylation inhibitor compounds: cyhexatin, diafenthiuron, fenbutatin oxide, propargite;

A.12. Moulting disruptor compounds: e.g. cyromazine;

A.13. Mixed function oxidase inhibitor compounds: e.g. piperonyl butoxide;

A.14. Sodium channel blocker compounds: e.g. indoxacarb, metaflumizone,

A.15. Various: benclothiaz, bifenazate, cartap, flonicamid, pyridalyl, pymetrozine, sulfur, thiocyclam, flubendiamide, cyenopyrafen, flupyrazofos, cyflumetofen, amidoflumet, the aminoquinazolinone compound of formula P4 (1-Acetyl-2-oxo-3-(pyridin-3-ylmethyl)amino-6-heptafluorpropyl-1,2,3,4-tetrahydroquinazoline)

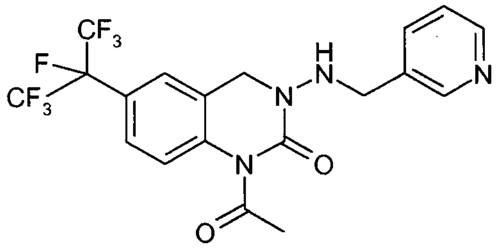

(P4),

compounds of the formula P5:

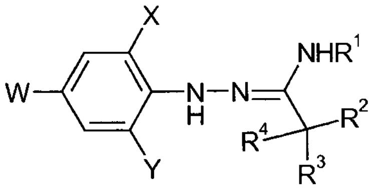

(P5)

wherein X and Y are each independently halogen, in particular chlorine;
W is halogen or $C_1$-$C_2$-haloalkyl, in particular trifluoromethyl;
$R^1$ is $C_1$-$C_6$-alkyl, $C_2$-$C_6$-alkenyl, $C_2$-$C_6$-alkynyl, $C_1$-$C_4$-alkoxy-$C_1$-$C_4$-alkyl or $C_3$-$C_6$-cycloalkyl each of which may be substituted with 1, 2, 3, 4 or 5 halogen atoms; in particular $R^1$ is methyl or ethyl;
$R^2$ and $R^3$ are $C_1$-$C_6$-alkyl, in particular methyl, or may form together with the adjacent carbon atom a $C_3$-$C_6$-cycloalkyl moiety, in particular a cyclopropyl moiety, which may carry 1, 2 or 3 halogen atoms, examples including 2,2-dichlorocyclopropyl and 2,2-dibromocyclopropyl; and $R^4$ is hydrogen or $C_1$-$C_6$-alkyl, in particular hydrogen methyl or ethyl;
e.g. the compounds of the following formulae P5a and P5b:

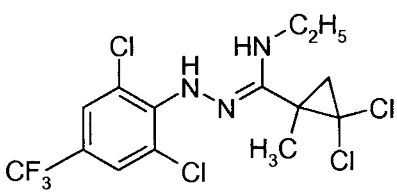

P5a

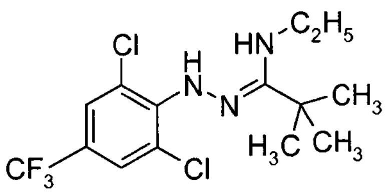

P5b

and
anthranilamide compounds of formula P6

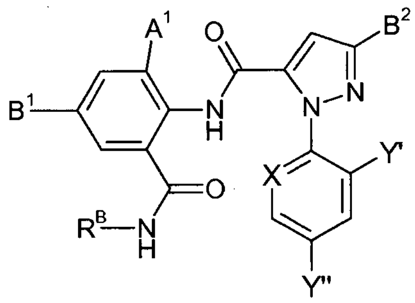

P6

wherein $A^1$ is $CH_3$, Cl, Br, I, X is C-H, C-Cl, C-F or N, Y' is F, Cl, or Br, Y" is F, Cl, $CF_3$, $B^1$ is hydrogen, Cl, Br, I, CN, $B^2$ is Cl, Br, $CF_3$, $OCH_2CF_3$, $OCF_2H$, and $R^B$ is hydrogen, $CH_3$ or $CH(CH_3)_2$;
and malononitrile compounds as described in JP 2002 284608, WO 02/89579, WO 02/90320, WO 02/90321, WO 04/06677, WO 04/20399, or JP 2004 99597.

Suitable pesticide compounds also include microorganisms such as *Bacillus thuringiensis, Bacillus tenebrionis* and *Bacillus subtilis.*

Suitable pesticide compounds are described in "The Pesticide Manual", 13th Edition, British Crop Protection Council (2003) among other publications. Thiamides of formula P2 and their preparation have been described in WO 98/28279. Lepimection is known from Agro Project, PJB Publications Ltd, November 2004. Benclothiaz and its preparation have been described in EP-A 454621. Methidathion and Paraoxon and their preparation have been described in Farm Chemicals Handbook, Volume 88, Meister Publishing Company, 2001. Acetoprole and its preparation have been described in WO 98/28277. Metaflumizone and its preparation have been described in EP-A 462 456. Flupyrazofos has been described in Pesticide Science 54, 1988, p. 237-243 and in US 4822779. Pyrafluprole and its preparation have been described in JP 2002193709 and in WO 01/00614. Pyriprole and its preparation have been described in WO 98/45274 and in US 6335357. Amidoflumet and its preparation have been described in US 6221890 and in JP 21010907. Flufenerim and its preparation have been described in WO 03/007717 and in WO 03/007718. Cyflumetofen and its preparation have been described in WO 04/080180. Compounds of the formula P5 have been e.g. described in EP-A 604798. Anthranilamides of formula P6 and their preparation have been described in WO 01/70671, WO 02/48137, WO 03/24222, WO 03/15518, WO 04/67528, WO 04/33468 and WO 05/118552.

Preferred compositions contain at least one insecticide compound selected from the group of pyrethroids, GABA antagonist compounds, sodium channel blocker compounds, nicotinic receptor agonists/antagonists compounds, compound of the formula P5, compound of the formula P6 and uncoupler compounds. Particular preferred compositions contain at least one insecticide compound selected from the group consisting of bifenthrin, tefluthrin, $\alpha$-cypermethrin or lambda cyhalotrin, ethiprole, pyriprole and fipronil, metaflumizone, acetamiprid, clothianidin, imidacloprid, nitenpyram, thiacloprid, thiamethoxam, dinetofuran, a compound of the formula P5, in particular of the formulae P5a or P5b, a compound of the formula P6 and chlorfenapyr.

In a preferred embodiment, the pesticide composition contains at least one pesticide compound selected from the group of pyrethroids, in particular selected from bifenthrin, tefluthrin, $\alpha$-cypermethrin or lambda cyhalotrin.

In another preferred embodiment, the pesticide composition contains at least one pesticide compound selected from the group of GABA antagonist compounds, in particular selected from ethiprole, pyriprole and fipronil. In this embodiment, the pesticide composition may contain at least one pesticide compound selected from the compounds of the formula P5, in particular the compounds of the formulae P5a or P5b.

In a further preferred embodiment, the pesticide composition contains at least one pesticide compound selected from the group of sodium channel blocker compounds, in particular metaflumizone.

In a further preferred embodiment, the pesticide composition contains at least one pesticide compound selected from the group of nicotinic receptor agonists/antagonists compounds, in particular selected from acetamiprid, clothianidin, imidacloprid, nitenpyram, thiacloprid, thiamethoxam and dinetofuran.

A further preferred embodiment of the invention, the pesticide composition contains at least one compound of the formula P5, as defined herein, in particular compound of the formulae P5a or P5b.

A further preferred embodiment of the invention, the pesticide composition contains at least one compound of the formula P6, as defined herein.

A further preferred embodiment of the invention, the pesticide composition contains at least one uncoupler compound, in particular chlorfenapyr.

The pesticide composition according to the invention preferably contains from 0.8% by weight, in particular from 1 to 5% by weight, based on the total weight of the composition, of at least one superabsorbent polymer.

Depending on the type of active ingredient, the compositions can be used for combating a large number of arthropod pests, including insects and arachnids.

They are particularly useful for combating insect pests, e.g. from the following orders:

lepidopterans (Lepidoptera), for example *Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella,*

*Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusiani* and *Zeiraphera canadensis;*

beetles (Coleoptera), for example *Agrilus sinuatus, Agriotes lineatus, Agriotes obscurus, Amphimallus solstitialis, Anisandrus dispar, Anthonomus grandis, Anthonomus pomorum, Aphthona euphoridae, Athous haemorrhoidalis, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Cetonia aurata, Ceuthorrhynchus assimilis, Ceuthorrhynchus napi, Chaetocnema tibialis, Conoderus vespertinus, Crioceris asparagi, Ctenicera ssp., Diabrotica longicornis, Diabrotica semipunctata, Diabrotica 12-punctata Diabrotica speciosa, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Ortiorrhynchus sulcatus, Otiorrhynchus ovatus, Phaedon cochleariae, Phyllobius pyri, Phyllotreta chrysocephala, Phyllophaga sp., Phyllopertha horticola, Phyllotreta nemorum, Phyllotreta striolata, Popillia japonica, Sitona lineatus* and *Sitophilus granaria;*

flies, mosquitoes (Diptera), e.g. *Aedes aegypti, Aedes albopictus, Aedes vexans, Anastrepha ludens, Anopheles maculipennis, Anopheles crucians, Anopheles albimanus, Anopheles gambiae, Anopheles freeborni, Anopheles leucosphyrus, Anopheles minimus, Anopheles quadrimaculatus, bactrocera olea, Calliphora vicina, Ceratitis capitata, Chrysomya bezziana, Chrysomya hominivorax, Chrysomya macellaria, Chrysops discalis, Chrysops silacea, Chrysops atlanticus, Cochliomyia hominivorax, Contarinia sorghicola Cordylobia anthropophaga, Culicoides furens,*

*Culex pipiens, Culex nigripalpus, Culex quinquefasciatus, Culex tarsalis, Culiseta inornata, Culiseta melanura, Dacus cucurbitae, Dacus oleae, Dasineura brassicae, Delia antique, Delia coarctata, Delia platura, Delia radicum, Dermatobia hominis, Fannia canicularis, Geomyza Tripunctata, Gasterophilus intestinalis, Glossina morsitans, Glossina palpalis, Glossina fuscipes, Glossina tachinoides, Haematobia irritans, Haplodiplosis equestris, Hippelates spp., Hylemyia platura, Hypoderma lineata, Leptoconops torrens, Liriomyza sativae, Liriomyza trifolii, Lucilia caprina, Lucilia cuprina, Lucilia sericata, Lycoria pectoralis, Mansonia titillanus, Mayetiola destructor, Musca domestica, Muscina stabulans, Oestrus ovis, Opomyza florum, Oscinella frit, Pegomya hysocyami, Phorbia antiqua, Phorbia brassicae, Phorbia coarctata, Phlebotomus argentipes, Psorophora columbiae, Psila rosae, Psorophora discolor, Prosimulium mixtum, Rhagoletis cerasi, Rhagoletis pomonella, Sarcophaga haemorrhoidalis, Sarcophaga sp., Simulium vittatum, Stomoxys calcitrans, Tabanus bovinus, Tabanus atratus, Tabanus lineola, and Tabanus similis, Tipula oleracea,* and *Tipula paludosa;*

thrips (Thysanoptera), e.g. *Dichromothrips corbetti, Dichromothrips ssp , Frankliniella fusca, Frankliniella occidentalis, Frankliniella tritici, Scirtothrips citri, Thrips oryzae, Thrips palmi* and *Thrips tabaci;*

termites (Isoptera), e.g. *Calotermes flavicollis, Leucotermes flavipes, Heterotermes aureus, Reticulitermes flavipes, Reticulitermes virginicus, Reticulitermes lucifugus, Termes natalensis,* and *Coptotermes formosanus;*

cockroaches (Blattodea), e.g. *Blattella germanica, Blattella asahinae, Periplaneta americana, Periplaneta japonica, Periplaneta brunnea, Periplaneta fuligginosa, Periplaneta australasiae,* and *Blatta orientalis;*

true bugs (Hemiptera), e.g. *Acrosternum hilare, Blissus leucopterus, Cyrtopeltis notatus, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis , Thyanta perditor, Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Bemisia argentifolii, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri,*

*Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzus persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand, Viteus vitifolii, Cimex lectularius, Cimex hemipterus, Reduvius senilis, Triatoma spp.,* and *Arilus critatus;*

ants, bees, wasps, sawflies (Hymenoptera), e.g. *Athalia rosae, Atta cephalotes, Atta capiguara, Atta cephalotes, Atta laevigata, Atta robusta, Atta sexdens, Atta texana, Crematogaster spp., Hoplocampa minuta, Hoplocampa testudinea, Monomorium pharaonis, Solenopsis geminata, Solenopsis invicta, Solenopsis richteri, Solenopsis xyloni, Pogonomyrmex barbatus, Pogonomyrmex californicus, Pheidole megacephala, Dasymutilla occidentalis, Bombus spp. Vespula squamosa, Paravespula vulgaris, Paravespula pennsylvanica, Paravespula germanica, Dolichovespula maculata, Vespa crabro, Polistes rubiginosa, Camponotus floridanus,* and *Linepithema humile;*

crickets, grasshoppers, locusts (Orthoptera), e.g. *Acheta domestica, Gryllotalpa gryllotalpa, Locusta migratoria, Melanoplus bivittatus, Melanoplus femurrubrum, Melanoplus mexicanus, Melanoplus sanguinipes, Melanoplus spretus, Nomadacris septemfasciata, Schistocerca americana, Schistocerca gregaria, Dociostaurus maroccanus, Tachycines asynamorus, Oedaleus senegalensis, Zonozerus variegatus, Hieroglyphus daganensis, Kraussaria angulifera, Calliptamus italicus, Chortoicetes terminifera,* and *Locustana pardalina;*

earwigs (Dermaptera), e.g. *forficula auricularia;*

silverfish, firebrat (Thysanura), e.g. *Lepisma saccharina* and *Thermobia domestica;*

lice (Phthiraptera), e.g. *Pediculus humanus capitis, Pediculus humanus corporis, Pthirus pubis, Haematopinus eurysternus, Haematopinus suis, Linognathus vituli, Bovicola bovis, Menopon gallinae, Menacanthus stramineus* and *Solenopotes capillatus;* and

fleas (Siphonaptera), e.g. *Ctenocephalides felis, Ctenocephalides canis, Xenopsylla cheopis, Pulex irritans, Tunga penetrans, and Nosopsyllus fasciatus.*

They are likewise useful for combating arachnid pests (Arachnida), e.g. from the following families: *Argasidae, Ixodidae and Sarcoptidae, such as Amblyomma americanum, Amblyomma variegatum, Ambryomma maculatum, Argas persicus, Boophilus annulatus, Boophilus decoloratus, Boophilus microplus, Dermacentor silvarum, Dermacentor andersoni, Dermacentor variabilis, Hyalomma truncatum, Ixodes ricinus, Ixodes rubicundus, Ixodes scapularis, Ixodes holocyclus, Ixodes pacificus, Ornithodorus moubata, Ornithodorus hermsi, Ornithodorus turicata, Ornithonyssus bacoti, Otobius megnini, Dermanyssus gallinae, Psoroptes ovis, Rhipicephalus sanguineus, Rhipicephalus appendiculatus, Rhipicephalus evertsi, Sarcoptes scabiei,* and *Eriophyidae spp.* such as *Aculus schlechtendali, Phyllocoptrata oleivora and Eriophyes sheldoni; Tarsonemidae spp.* such as *Phytonemus pallidus* and *Polyphagotarsonemus latus; Tenuipalpidae spp.* such as *Brevipalpus phoenicis; Tetranychidae spp.* such as *Tetranychus cinnabarinus, Tetranychus kanzawai, Tetranychus pacificus, Tetranychus telarius* and *Tetranychus urticae, Panonychus ulmi, Panonychus citri,* and *Oligonychus pratensis; Araneida,* e.g. *Latrodectus mactans,* and *Loxosceles reclusa,*

They are likewise useful for combating myriapod pests (myriapoda) e.g. of the orders centipedes (Chilopoda), such as *Scutigera coleoptrata,* and millipedes (Diplopoda), e.g. *Narceus spp..*

In a preferred embodiment of the invention, the pesticide compound is selected from a compound that is active against at least one insect species selected from the following orders: hymenoptera, blattodea, in particular of the families blattidae and blattellidae, isoptera, diptera and lepidoptera. In another preferred embodiment of the invention, the pesticide compound is selected from a compound that is active against at least one plant damaging insect species selected from

the following orders: hymenoptera, isoptera, diptera, coleoptera and lepidoptera.

In a particular preferred embodiment, the pesticide compound is selected from a compound which is active against coleopteran species, in particular diabrotica species.

In a further particular preferred embodiment, the pesticide compound is selected from a compound which is active against blattodea_species.

In a further particular preferred embodiment, the pesticide compound is selected from a compound which is active against diptera specides, in particular ceratitis spp. such as ceratitis capitata, and bactrocera species such as *bactrocera olea.*

A skilled person is familiar with such compounds and knows which compounds are active against a specific target organism.

Superabsorbent polymers are well-known synthetic organic polymers which are solid and hydrophilic, which are insoluble in water, and which are capable of absorbing a multiple of their weight of water or aqueous solutions, thereby forming a water containing polymer gel. Superabsorbent polymers according to the present invention are generally capable of absorbing at least 100 parts by weight of water per one part by weight of superabsorbent polymer (deionised water at 25°C, pH 7.5, 1 bar). The amount of water or aqueous solution a superabsorbent polymer is capable of absorbing is also termed as absorption capacity or maximal absorption. For purposes of the invention, superabsorbent polymers are preferred which have an absorption capacity for deionised water (pH 7.5, 25°C, 1 bar) of at least 150 g/g, e.g. 150 to 500 g/g, in particular 200 to 500 g/g, more preferably 300 to 500 g/g of superabsorbent polymers. For purposes of the invention, superabsorbent polymers are preferred which have an absorption capacity for a 0.1 % by weight aqueous solution of sodium chloride of at least 100 g/g, in particular 100 to 300 g/g of superabsorbent polymer (pH 7.5, 25°C, 1 bar). The maximal absorption or absorption capacity can be determined by routine methods known e.g. from F. L. Buchholz et al. "Modern Superabsorbent Polymer Technology", Wiley-VCH 1998, p. 153 (absorbent capacity method) or EP 993 337, example 6.

Preferred superabsorbent polymers are those which have a moderate swelling rate, i.e. superabsorbents, wherein the time required to achieve 60% of the maximal absorption is at most 20 minutes, in particular from 1 to 10 minutes. These values can be determined according to standard methods as described in F. L. Buchholz et al., loc. cit., p. 154 (swelling kinetics methods).

The superabsorbent polymers may be nonionic or ionic crosslinked polymers. For the purpose of the invention, the superabsorbent polymer is preferably selected from crosslinked anionic superabsorbent polymers, in particular from covalently crosslinked anionic superabsorbent polymers. A survey of suitable superabsorbent polymers is e.g. given in F. L. Buchholz et al., loc. cit., p. 11-14.

Crosslinked anionic superabsorbent polymers are crosslinked polymers which comprise anionic functional groups or acidic groups, which can be neutralized in water, e.g. sulfonic acid groups ($SO_3H$ or $SO_3^-$), phosphonate groups ($PO_3H_2$ or $PO_3^{2-}$) or carboxylate groups ($CO_2H$ or $CO_2^-$). These polymers are in principle obtainable by copolymerizing a monoethylenically unsaturated acidic monomer and a crosslinking monomer optionally in the presence of a grafting base and optionally in the presence of further neutral monoethylenically unsaturated monomers. In preferred superabsorbent polymers the carboxylate groups make up at least 80 mol-%, in particular at least 95 mol-% of the acidic groups.

Suitable acidic monomers include monoethylenically unsaturated mono- and dicarboxylic acids having preferably from 3 to 8 carbon atoms such as acrylic acid, methacrylic acid, ethacrylic acid, $\alpha$-chloroacrylic acid, crotonic acid, maleic acid, maleic anhydride, itaconic acid, citraconic acid, mesaconic acid, glutaconic acid, aconitic acid and fumaric acid; monoesters of monoethylenically unsaturated dicarboxylic acids having from 4 to 10 and preferably from 4 to 6 carbon atoms, for example monoesters of maleic acid such as monomethyl maleate; monoethylenically unsaturated sulfonic acids and phosphonic acids, for example vinylsulfonic acid, allylsulfonic acid, sulfoethyl acrylate, sulfoethyl methacrylate, sulfopropyl acrylate, sulfopropyl methacrylate, 2-hydroxy-3-acryloyloxypropylsulfonic acid, 2-hydroxy-3-methacryloyloxypropylsulfonic acid, styrenesulfonic acid, 2-acrylamido-2-methylpropanesulfonic acid, vinylphosphonic acid and allylphosphonic acid and the salts, especially the sodium, potassium and ammonium salts, of these acids. The acidic monomers usually make up at least 15%, by weight, preferably at least 20% by weight, of the superabsorbent polymer, e.g. 15 to 99.9% by weight, in particular from 20 to 99.8% by weight, based on the acidic form of the anionic superabsorbent polymer.

Preference is given to crosslinked anionic superabsorbent polymers, wherein the polymerized acidic monomers comprise at least one monoethylenically unsaturated carboxylic acid CA or a salt thereof. Preferably the monoethylenically unsaturated carboxylic acid CA or the salt thereof accounts for at least 80 mol-%, in particular at least 95 mol-% of the total amount of polymerized acidic monomeres.

Useful crosslinking monomers include compounds having at least two, for example 2, 3, 4 or 5, ethylenically unsaturated double bonds in the molecule. These compounds are also referred to as crosslinker monomers. Examples of crosslinker monomers are N,N'-methylenebisacrylamide, polyethylene glycol diacrylates and polyethylene glycol dimethacrylates, each derived from polyethylene glycols having a molecular weight from 106 to 8500 and preferably

from 400 to 2000, trimethylolpropane triacrylate, trimethylol propane trimethacrylate, ethylene glycol diacrylate, ethylene glycol dimethacrylate, propylene glycol diacrylate, propylene glycol dimethacrylate, butanediol diacrylate, butanediol dimethacrylate, hexanediol diacrylate, hexanediol dimethacrylate, diethylene glycol diacrylate, diethylene glycol dimethacrylate, triethylene glycol diacrylate, triethylene glycol dimethacrylate, dipropylene glycol diacrylate, dipropylene glycol dimethacrylate, tripropylene glycol diacrylate, tripropylene glycol dimethacrylate, allyl methacrylate, diacrylates and dimethacrylates of block copolymers of ethylene oxide and propylene oxide, di-, tri-, tetra- or pentaacrylated or -methacrylated polyhydric alcohols, such as glycerol, trimethylolpropane, pentaerythritol or dipentaerythritol, esters of monoethylenically unsaturated carboxylic acids with ethylenically unsaturated alcohols such as allyl alcohol, cyclohexenol and dicyclopentenyl alcohol, e.g. allyl acrylate and allyl methacrylate, also triallylamine, dialkyldiallylammonium halides such as dimethyldiallylammonium chloride and diethyldiallylammonium chloride, tetraallylethylenediamine, divinylbenzene, diallyl phthalate, polyethylene glycol divinyl ethers of polyethylene glycols having a molecular weight from 106 to 4000, trimethylolpropane diallyl ether, butanediol divinyl ether, pentaerythritol triallyl ether, reaction products of 1 mol of ethylene glycol diglycidyl ether or polyethylene glycol diglycidyl ether with 2 mol of pentaerythritol triallyl ether or allyl alcohol, and divinylethyleneurea. The amount of crosslinker monomer is preferably in the range from 0.1 to 10% by weight and especially in the range from 0.2 to 5% by weight, based on the weight of the superabsorbent polymer in the acidic form.

Suitable grafting bases can be of natural or synthetic origin. They include oligo- and polysaccharides such as starches, i.e. native starches from the group consisting of corn (maize) starch, potato starch, wheat starch, rice starch, tapioca starch, sorghum starch, manioca starch, pea starch or mixtures thereof, modified starches, starch degradation products, for example oxidatively, enzymatically or hydrolytically degraded starches, dextrins, for example roast dextrins, and also lower oligo- and polysaccharides, for example cyclodextrins having from 4 to 8 ring members. Useful oligo- and polysaccharides further include cellulose and also starch and cellulose derivatives. It is also possible to use polyvinyl alcohols, homo- and copolymers of N-vinylpyrrolidone, polyamines, polyamides, hydrophilic polyesters or polyalkylene oxides, especially polyethylene oxide and polypropylene oxide as a grafting base. The amount of grafting base may be up to 50% by weight of the weight of the superabsorbent polymer in the acidic form, e.g. from 1 to 50% by weight. In a preferred embodiment the amount of grafting base is less than 10% by weight of the weight of the superabsorbent polymer in the acidic form, or the grafting base is virtually absent (< 1% by weight).

The monomers forming the superabsorbent polymer may also contain neutral monethylenically unsaturated monomers which do not have an acidic group. Examples are monoethylenically hydrophilic monomers, i.e. monomers having a water solubility of at least 80 g/l at 25°C 1 bar, including hydroxyalkyl esters of monoethylenically monocarboxylic acids, e.g. the hydroxyalkyl acrylates and methacrylates, such as hydroxyethylacrylate and hydroxyethylmethacrylate, amides of monoethylenically monocarboxylic acids such as acrylamide and methacrylamide, monomers having a polyether group, such as vinyl, allyl and methallyl ethers of polyethylene glycols and esters of monoethylenically monocarboxylic acids and polyethers, such as polyethylenglykol acrylate and polyethyleneglycol methacrylate. In a preferred embodiment of the invention the neutral monomers make up from 10 to 84.9% by weight, in particular from 20 to 79.9% by weight of the superabsorbent polymer in the acidic form.

Preferred anionic superabsorbent polymers have a moderate charge density, i.e. the amount of acidic groups in the superabsorbent polymer is preferably from 0.1 to 1.1 mol per 100 g of superabsorbent polymer, in particular form 0.2 to 1 mol per 100 g of superabsorbent polymer, based on the weight of the superabsorbent polymer in the acidic form.

In a very preferred embodiment of the invention, the superabsorbent polymer is a crosslinked copolymer or graft copolymer of ethylenically unsaturated monomers M which comprise at least one monoethylenically unsaturated carboxylic acid CA or a salt thereof and at least one amide of a monoethylenically unsaturated acid (monomer AM).

Suitable monoethylenically unsaturated carboxylic acids CA comprise monoethylenically unsaturated monocarboxylic acids having 3 to 8 carbon atoms, such as acrylic acid and methacrylic acid, and monoethylenically unsaturated dicarboxylic acids having from 4 to 8 carbon atoms, such as maleic acid, fumaric acid, itaconic acid and citraconic acid. Suitable salts of monoethylenically unsaturated carboxylic acids CA comprise the alkali metal salts and the ammonium salts, in particular the potassium or sodium salts. Preferred monoethylenically unsaturated carboxylic acids CA include mono-carboxylic acids having 3 to 8 carbon atoms, in particular acrylic acid and methacrylic acid and the salts thereof, in particular the alkalimetal salts thereof, and more preferably the alkali metal salts of acrylic acid, especially the sodium salt and the potassium salt of acrylic acid.

Suitable amides of monoethylenically unsaturated acids are the amides of monoethylenically unsaturated monocarboxylic acids having 3 to 8 carbon atoms, in particular acrylamide and methacrylamide.

In this embodiment, the superabsorbent polymer is preferably a covalently crosslinked copolymer, i.e. the superabsorbent polymer contains polymerized crosslinking monomers besides polymerized monomers CA and AM, preferably in amounts 0.1 to 10%, in particular 0.2 to 5% by weight, based on the superabsorbent polymer in the acidic form, the total amount of monomers AM and CA making up at least 80% by weight and more preferably at least 90% by weight, in particular from 90 to 99.9%, based on the superabsorbent polymer in the acidic form.

Preferably, the carboxylic acid CA and the amide AM make up at least 80% by weight and more preferably at

least 90% by weight of the ethylenically unsaturated monomers M forming the superabsorbent polymer.

In a particular preferred embodiment, the monomers M comprise at least 90% by weight, based on the total weight of monomers M, of a mixture of acrylic acid or a salt thereof, in particular an alkali metal salt thereof, more preferably the potassium salt of acrylic acid, and acrylamide.

In particular, the superabsorbent polymer comprises in polymerized form:

- 15 to 89.9%, in particular 20 to 79.8% by weight of at least one carboxylic acid CA or a salt thereof, preferably acrylic acid or a salt thereof, in particular an alkalimetal salt thereof, more preferably the potassium salt of acrylic acid (calculated in the acidic form),
- 10 to 84.9% in particular 20 to 79.8% by weight of at least one amide AM, preferably an amide of a monoethylenically unsaturated mono-carboxylic acid having 3 to 8 carbon atoms, in particular acrylamide; and
- 0.1 to 10%, in particular 0.2 to 5% by weight of at least one crosslinker monomer, wherein the % by weight are based on the superabsorbent polymer in the acidic form, the amount of monomers AM and CA making up at least 90%, e.g. 90 to 99.9% of the monomers forming the superabsorbent polymer or the total amount of monomers AM and CA make up at least 80% by weight and more preferably at least 90% by weight, in particular from 90 to 99.9%, based on the superabsorbent polymer in the acidic form.

Suitable superabsorbent polymers of this type are known in the art, e.g. from US 4,417,992, US 3,669,103 and WO 01/25493. They are also commercially available, e.g. from SNF SA., France, under the trademark Aquasorb®, e.g. 3500 S.

In another very preferred embodiment of the invention, the superabsorbent polymer is a crosslinked copolymer or graft copolymer of ethylenically unsaturated monomers M which comprise at least 80% by weight, preferably at least 90% by weight, based on the total amount of monomers M, of a mixture of at least one monoethylenically unsaturated carboxylic acid CA, preferably acrylic and at least one alkali metal salt of a monoethylenically unsaturated carboxylic acid CA, preferably a potassium salt or sodium salt thereof, more preferably the potassium salt or sodium salt of acrylic acid. In this embodiment, the superabsorbent polymer is preferably a covalently crosslinked copolymer, i.e. the superabsorbent polymer contains polymerized crosslinking monomers besides polymerized carboxylic acid CA and the salt of CA, preferably in amounts 0.1 to 10%, in particular 0.2 to 5% by weight, based on the superabsorbent polymer in the acidic form, the total amount of carboxylic acid CA and the salt of CA making up at least 80% by weight and more preferably at least 90% by weight, in particular from 90 to 99.9%, based on the superabsorbent polymer in the acidic form.

In particular, the superabsorbent polymer of this embodiment comprises in polymerized form:

- 15 to 89.9%, in particular 20 to 79.8% by weight of at least one carboxylic acid CA, preferably acrylic acid;
- 10 to 84.9% in particular 20 to 79.8% by weight of at least one or a salt thereof, in particular an alkalimetal salt thereof, more preferably the potassium salt of acrylic acid (calculated in the acidic form); and
- 0.1 to 10%, in particular 0.2 to 5% by weight of at least one crosslinker monomer, wherein the % by weight are based on the superabsorbent polymer in the acidic form, the amount of carboxylic acid CA and the salt of CA making up at least 90%, e.g. 90 to 99.9% of the monomers forming the superabsorbent polymer or the total amount of carboxylic acid CA and the salt of CA make up at least 80% by weight and more preferably at least 90% by weight, in particular from 90 to 99.9%, based on the superabsorbent polymer in the acidic form.

Suitable superabsorbent polymers of this type are commercially available, e.g. from BASF AG under the trade names Luquasorb®, e.g. Luquasorb® 1010.

Usually, the superabsorbent polymer is used for the preparation of the composition in the form of a powder. Preferably, the average particle size of the superabsorbent particles does not exceed 0.5 mm, preferably not 0.3 mm. The average particle size is the weight average of the diameter which may be determined by microscopy or by sieving analysis.

In one embodiment of the invention the superabsorbent polymer, which is used for preparing the pesticide composition, is in the form of surface crosslinked polymer particles (see F.L. Buchholz, loc. cit. pp. 97 to 103, and the literature cited therein). In the surface crosslinked polymer particles some of the functional group in the surface region of the superabsorbent polymer granules have been crosslinked by reaction with polyfunctional compounds. Surface crosslinking can be a covalent or ionic crosslinking. In another embodiment, the superabsorbent polymer particles do not have a surface crosslinking.

According to the invention, the pesticide composition further contains at least one filler material which is different from water and of course also different from the pesticide compound and the superabsorbent polymer P. The filler material is generally chosen from liquid, solid or semi-solid (e. g. pasty) materials, which, together with the water and the superabsorbent polymer P provides the pesticide composition with a gel-like or solid texture.

The filler material is generally an organic or inorganic material or a mixture organic and inorganic materials the

filler material being solid, liquid or semisolid and having itself no or not a marked pesticidal activity. Of course, the filler material is different from water, the pesticide compound and the superabsorbent polymer.

The filler material is preferably an organic material which is solid, liquid or semisolid, and which itself has no or not a marked pesticidal activity. Suitable filler materials include in particular organic materials that are present in gel formulations of pesticide compounds. Examples of typical fillers are attractants, co-formulants (i.e. organic material which is usually present in conventional pesticide formulations), means for adjusting the pH of the composition and inert carrier materials. Typical fillers include attractants and also co-formulants (i.e. organic material which is usually present in conventional pesticide formulations), and optionally means for adjusting the pH of the composition. However, the filler material may also include an inert carrier material which may be organic or inorganic.

The filler material comprises at least one material which renders the composition attractive to the pest to be controlled. Such components are also referred to as attractants. Attractants are non-pesticidal materials which may act in one or several of the following ways: a) entice the insect to approach the composition or the material treated with the composition; b) entice the insect to touch the composition or the material treated with the composition; c) entice the insect to consume the composition or the material treated with the composition; and d) entice the insect to return to the composition or the material treated with the composition. Suitable attractants include non-food attractants and food attractants, also termed as feeding stimulants.

Suitable non-food attractants are usually volatile material. The volatile attractants act as a lure and their type will depend on the pest to be controlled in a known manner. Non-food attractants include:

- semiochemicals such as pheromones, in particular sex pheromones and aggregation pheromones, kairomones and
- flavours of natural or synthetic origin.

Suitable semiochemicals can be taken for example from http://pherobase.com and T.D. Wyatt, Pheromones and Animal Behaviour: Communication by Smell and Taste, Cambridge 2003: Cambridge University Press. Examples include volatile alkanols and alkenols having from 5 to 10 carbon atoms, volatile alkanals and alkenals having from 5 to 10 carbon atoms, alkanones having from 6 to 10 carbon atoms, 1,7-dioxaspirononan and 3- or 4-hydroxy-1,7-dioxaspiroundecan, benzyl alcohol, Z-(9)-tricosene (muscalure), heneicosene, diacetyl, alcanoic acids having from 5 to 10 carbon atoms such as caprylic acid, laurylic acid, $\alpha$-pinen, methyleugenol, ethyldodecanoate, tert-butyl 4-(or 5-)chloro-2-methylcyclohexane-carboxylate, mycrenone and cucurbitacin. Suitable flavors include meat flavour, yeast flavour, seafood flavour, milk flavour, butter flavour, cheese flavour, onion flavour, and fruit flavours such as flavours of apple, apricot, banana, blackberry, cherry, currant, gooseberry, grape, grapefruit, raspberry and strawberry.

In a very preferred embodiment of the invention the composition contains cucurbitacin. Cucurbitacin may be included in the composition as such or in the form of a suitable plant extract, such as melon juice extract. Such extracts are commercially available e.g. as Invite®, Slam® or Cidetrak®.

Suitable feeding stimulants include:

- proteins, including animal proteins and plant proteins, e. g. in the form meat meal, fish meal, fish extracts, seafood, seafood extracts, or blood meal, insects parts, crickets powder, yeast extracts, egg yolk, protein hydrolysates, yeast autolysates, gluten hydrolysates, and the like;
- carbohydrates and hydrogenated carbohydrates, in particular mono- and disaccharides such glucose, arabinose, fructose, mannose, sucrose, lactose, galactose, maltose, maltotriose, maltotetrose, maltopentose or mixtures thereof such as molasses, corn syrup, maple sirup, invert sugars, and honey; polysaccharides including starch such as potato starch, corn starch, and starch based materials such as cereal powders (e.g. wheat powder, maize powder, malt powder, rice powder, rice bran), pectines, and glycerol, hydrogenated mono- and oligosaccharides (sugar alcohols) such as xylitol, sorbitol, mannitol, isomaltolose, trehalose and maltitol as well as maltitol containing syrups;
- fats and oils, such as vegetable oils, e.g. corn oil, olive oil, caraway oil, linseed oil, canola oil, peanut oil, rape seed oil, sesame oil, soy bean oil, sunflower oil, fats and oils of animal origin such as fish based oil, and also fatty acids derived from the aforementioned fats and oils.

The aforementioned attractants may also be present in the form of complex mixtures comprising volatile materials and feeding stimulants such as fruit juices, fruit syrups, and fruit extracts, decaying parts of organic material such as decaying parts of fruits, crops, plants, animals, insects or specific parts thereof.

The total amount of attractant will generally be in the range from 1 to 80% by weight of the composition, in particular from 5 to 70% by weight of the composition and more preferably from 10 to 60% by weight of the composition. In particular, the composition of the present invention comprises at least one non-food attractant and at least one feeding stimulant. The amount of non food attractant (semiochemicals and flavours) is generally from 0.0001 to 10% by weight, in particular from 0.001 to 1% by weight of the composition. The amount of feeding stimulant is generally from 1 to 80% by weight of the composition, in particular from 5 to 70% by weight of the composition and more preferably from 10 to

60% by weight of the composition..

In a preferred embodiment, the composition comprises at least one feeding stimulant selected from the group of carbohydrates and hydrogenated carbohydrates, in particular at least one material selected from mono- or oligosaccharides, cereal powders and sugar alcohols, and optionally starch or pectines. If present, the amount of carbohydrate material and/or hydrogenated carbohydrates is from 1 to 50% by weight, in particular from 3 to 30% by weight of the composition. In a preferred embodiment of the invention the composition comprises a mixture of at least one carbohydrate, in particular at least one mono- or oligosaccharide and/or at least one cereal powder and at least one hydrogenated carbohydrate, in particular at least one sugar alcohol such as sorbitol or maltitol.

In a preferred embodiment of the present invention, the composition contains at least one hydrophobic material selected from the fatty acids, di- and triglycerides of fatty acids, fatty alcohols, and their mixtures. Preference is given to a hydrophobic material which is of natural origin such as fats and oils and fatty acids of plant or animal origin, in particular those mentioned as feed-stimulants. The term "fatty acid", as used herein, refers to aliphatic carboxylic acids having from 10 to 22 carbon atoms which may be saturated or which may carry 1, 2 or 3 ethylenically double bonds. The term and "fatty alcohol" refers to alkanols having from 10 to 22 carbon atoms. Preferably the hydrophobic material is selected from triglycerides of fatty acids being of natural origin such as fats and oils of plant or animal origin, examples including corn oil, linseed oil, sunflower oil, peanut oil, rape seed oil, olive oil, peanut butter, sesame oil. If present, the amount of hydrophobic material will generally be from 1 to 50% by weight, in particular from 3 to 30% by weight. The hydrophobic material may be partially or completely replaced by di- or polyols having from 3 to 10 carbon atoms.

In a preferred embodiment of the present invention, the composition comprises at least one protein material, which may be of animal or plant origin. If present, the amount of protein material will be in the range from 1 to 50% by weight, in particular from 2 to 20% by weight of the composition.

The compositions of the invention may also contain means for adjusting the pH of the composition or of the aqueous dilution obtained therefrom. Suitable means for adjusting the pH include buffers, bases and in particular acids.

Suitable acids include organic and inorganic acids, in particular organic carboxylic acids such as citric acid, maleic acid, malic acid, pyruvic acid, glycolic acid etc. The amount of will be generally not exceed 2% by weight, based on the total weight of the composition. In particular the acid may be present in amounts ranging from 0.01 to 2% by weight, more preferably from 0.1 to 1% by weight.

Additionally, the pesticide compositions may comprise co-formulants (additives), i.e. compounds which are present in conventional pesticide formulations or which are incorporated in the pesticide formulation to modify their properties. The amount of co-formulant will generally not exceed 20% by weight or 10% by weight, based on the total weight of the composition. Frequently, co-formulants are present in amounts ranging from 0.01 to 20%, by weight, in particular from 0.1 to 10% by weight, based on the total weight of the composition.

Suitable co-formulants (additives) include

a) surfactants, such as dispersants, wetting agents and emulsifiers;
b) organic solvents;
c) defoamers (anti-foams);
d) thickeners;
e) preservatives;
f) dyes or pigments; and
g) repellents.

The surfactants may be non-ionic, anionic, cationic or amphoteric. Suitable surfactants that may be contained in the liquid formulations of the invention are disclosed, e.g. in "McCutcheon's Detergents and Emulsifiers Annual", MC Publishing Corp., Ridgewood, NJ, USA 1981; H. Stache, "Tensid-Taschenbuch", 2nd ed., C. Hanser, Munich, Vienna, 1981; M. and J. Ash, "Encyclopedia of Surfactants", vol. I-III, Chemical Publishing Co., New York, NY, USA 1980-1981. The amount of surfactant will depend on whether the composition is applied directly, i.e. in the form of a ready to use gel. In a ready to use gel, the amount of surfactant will generally not exceed 1 % by weight, based on the total weight of the composition except for surface active compounds which are contained in the feeding stimulant and except for fatty acids. In a water dilutable composition the amount of surfactant will generally be from 0.1 to 10% by weight, in particular from 0.2 to 5% by weight, based on the total weight of the composition.

Suitable surfactants include

a1) anionic surfactants, including

- alkylsulfonates, such as lauryl sulfonate or isotridecylsulfonate,
- alkylsulfates, in particular fatty alcohol sulfates, such as lauryl sulfate, isotridecylsulfate, cetylsulfate, stearylsulfate

- aryl- and alkylarylsulfonates, such as naphthylsulfonate, dibutylnaphthylsulfonate, dodecyldiphenylether sulfonate, cumylsulfonate, nonylbenzenesulfonate, dodecylbenzene sulfonate;
- sulfonates of fatty acids and fatty acid esters;
- sulfates of fatty acids and fatty acid esters;
- sulfates of alkoxylated alkanoles, such as sulfates of ethoxylated lauryl alcohol;
- sulfates of alkoxylated alkylphenols;
- alkylphosphates, $C_8$-$C_{16}$ alkylphosphates;
- dialkylphosphates, $C_8$-$C_{16}$ dialkylphosphates;
- dialkylesters of sulfosuccinic acid, such as dioctylsulfosuccinate,
- acylsarcosinates,
- fatty acids, such as stearates,
- acylglutamates, and
- ligninsulfonates,

  generally in the form of alkalimetal salts, earth alkaline metal salts or ammonium salts, in particular in the form of sodium, potassium calcium or ammonium salts;

a2) non-ionic surfactants, including

- alkoxylated alkanoles, in particular ethoxylated fatty alcohols and ethoxylated oxoalcohols, such as ethoxylated lauryl alcohol, ethoxylated isotridecanol, ethoxylated cetyl alcohol, ethoxylated stearyl alcohol, and esters thereof, such as acetates
- alkoxylated alkylphenols, such as ethoxylated nonylphenyl, ethoxylated dodecylphenyl, ethoxylated isotridecylphenol and the esters thereof, e.g. the acetates
- alkylglucosides and alkyl polygucosides,
- copolymers, in particular block-copolymers of ethyleneoxide and propyleneoxide,
- ethoxylated alkylglucosides and alkyl polygucosides,
- ethoxylated fatty amines,
- ethoxylated fatty acids,
- partial esters, such as mono-, di- and triesters of fatty acids with glycerine or sorbitan, such as glycerine monostearate, sorbitanmonooleat, sorbitantristearat
- ethoxylated partial esters of fatty acids with glycerine or sorbitan, such as ethoxylated glycerine monostearate
- ethoxylates of vegetable oils or animal fats, such as corn oil ethoxylate, castor oil ethoxylate, tallow oil ethoxylate,
- ethoxylates of fatty amines, fatty amides or of fatty acid diethanolamides

a3) cationic surfactants, for example

- quaternary ammonium compounds, in particular alkyltrimethylammonium salts and dialkyldimethylammonium salts, e.g. the halides, sulfates and alkylsulfates
- Pyridinium salts, in particular alkylpyridinium salts e.g. the halides, sulfates and $C_1$-$C_4$-alkylsulfates and
- Imidazolinium salts in particular N,N'-dialkylimidazolinium salts, e.g. the halides, sulfates or methoxulfates.

As regards the surfactants, the term "alkyl" as used herein and if not defined otherwise is a linear or branched alkyl group having from 4 to 30, preferably from 6 to 22 carbon atoms, e.g. n-hexyl, 1-methylpentyl, n-heptyl, n-octyl, 2-ethylhexyl, n-nonyl, n-decyl, 1-methylnonyl, 2-propylheptyl, n-dodecyl, 1-methyldodecyl, n-tridecyl, n-tetradecyl, n-pentadecyl, n-hexadecyl, n-heptadecyl, n-octadecyl, n-nonadecyl, n-eicosyl, and the like. The terms "alkoxylated" and "alkoxylates" means that OH-functions have been reacted with an alkyleneoxide, in particular a $C_2$-$C_4$-alkylene oxide, preferably ethyleneoxide or a mixture of ethyleneoxide or propyleneoxide to form an oligoalkyleneoxide group. Likewise the term "ethoxylated" means that OH-functions have been reacted with ethyleneoxide to form an oligoethyleneoxide group. The degree of alkoxylation (or ethoxylation) refers to number average of alkyleneoxide (ethyleneoxide) repeating units and will usually be in the range from 1 to 50, frequently from 1 to 30 and in particular from 2 to 20. The amount of surfactant will preferably not exceed 5% by weight, based on the total weight of the pesticide composition and may vary from 0.001 to 5% by weight, in particular from 0.01 to 3% by weight, based on the total weight of the composition or from 1 to 100% by weight, in particular from 5 to 50% by weight, based on the total weight of pesticide compound present in the composition.

Organic solvents include organic liquids having a boiling point at 1 bar of at most 250°C. Organic solvents include hydrocarbon solvents such as aromatic solvents (for example Solvesso products, xylene), paraffins (for example mineral fractions), and aliphatic solvents; alcohols including $C_1$-$C_6$-alkanols (for example methanol, butanol, pentanol, benzyl alcohol) and $C_2$-$C_6$-polyols, in particular glycols such as ethylene glycol and propylene glycol; $C_3$-$C_6$-ketones (for

example acetone, cyclohexanone); $C_4$-$C_6$-lactones (e.g. gamma-butyrolactone), $C_4$-$C_6$-lactames and $C_1$-$C_8$-alkyl-$C_4$-$C_6$-lactames and, in particular pyrrolidones and N-($C_1$-$C_8$-alkyl)pyrrolidones (e.g. N-methyl pyrrolidone, N-ethyl pyrrolidone, N-octyl pyrrolidone), esters of $C_1$-$C_4$-aliphatic acids with $C_1$-$C_8$-alkanols or $C_2$-$C_6$-polyols, in particular acetates thereof (e.g. glycol acetate and glycol diacetate); sulfoxides such as dimethylsulfoxide; dimethylamides of $C_1$-$C_4$-carboxylic acids. The amount of solvent will be generally not exceed 10% by weight, based on the total weight of the composition. For example, the compositions may contain an alcohol as an anti-freeze additive. The amount of alcohol may be from 0.5 to 10% by weight of the composition.

Suitable defoamers include polysiloxanes, such as polydimethyl siloxane and waxes. The amount of defoamer will be generally not exceed 1 % by weight, based on the total weight of the composition. E.g. in the water dilutable compositions, the defoamer may be present in amounts ranging from 0.001 to 1% by weight, in particular from 0.001 to 0.8% by weight

Suitable thickening agents (thickeners) include inorganic thickening agents, such as clays, hydrated magnesium silicates and organic thickening agents, such as polysaccharide gums, like gellan gum, jelutong gum, xanthan gum, guar gum, gum arabic, locust gum, agar agar, water soluble polyacrylate polymers, polyvinyl alcohol, water soluble peptides such as casein or gelatine, and cellulose derivatives such as carboxymethyl cellulose. The amount of thickening agent will generally not exceed 1 % by weight, based on the total weight of the composition. E.g. in the water dilutable compositions, the thickener may be present in amounts ranging from 0.001 to 1% by weight, in particular from 0.001 to 0.8% by weight.

Suitable preservatives to prevent microbial spoiling of the formulations of the invention include formaldehyde, alkyl esters of p-hydroxybenzoic acid, sodium benzoate, 2-bromo-2-nitropropane-1,3-diol, o-phenylphenol, thiazolinones, such as benzisothiazolinone, 5-chloro-2-methyl-4-isothiazolinone, pentachlorophenol, 2,4-dichlorobenzyl alcohol and mixtures thereof. The amount of preservatives will be generally not exceed 0.1 % by weight, based on the total weight of the composition.

Suitable pigments or dyes include pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108. The amount of dyes and/or pigments will be generally not exceed 1 % by weight, based on the total weight of the composition except for water, and the dye or pigment may be present in amounts ranging from 0.001 to 1% by weight, in particular from 0.01 to 0.5% by weight.

Suitable repellents may be present to avoid uptake by vertebrates such as birds, amphibias, reptiles or warm blooded animals, in particular human beings. The repellent will usually be present in the ready to use gel. Suitable repellents are bitterness agents such as denatonium benzoate (*N*-benzyl-2-(2,6-dimethylphenylamino)-*N,N*-diethyl-2-oxoethanaminium benzoate) and hot substances such as Guinea pepper.

Suitable carriers are in particular solid organic or inorganic materials which are conventionally used in the preparation of solid pesticide formulations, e.g. mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, for example, ammonium sulfate, ammonium phosphate, ammonium nitrate, ureas, and products of vegetable origin, such as cellulose powders, tree bark meal, wood meal and nutshell meal. The amount of inert carrier will generally not exceed 50% by weight of the composition, and will in particular not exceed 30% or 10% by weight of the pesticide composition. In one embodiment such inert fillers are absent.

The compositions of the present invention also contain water. The amount of water is preferably from 10 to 84.5% by weight, in particular from 15 to 74.5% by weight and more preferably from 20 to 69.5% by weight. The amount of water is chosen in a manner to provide a gel-like or solid texture.

In one preferred embodiment of the present invention, the compositions are formulated as ready-to-use gels. The ready-to-use gels are applied directly and thus are formulated in a manner that allows an easy distribution to a location where the arthropod pests get into contact with the gel composition.

Usually, the ready-to-use gel is usually applied by means of a suitable device which contains the ready-to-use gel. Suitable means are cartridge dispensers, collapsible tubes, and the like. The gels may also be contained in a bait box, which can be entered by the pest to be controlled. Therefore, the present invention also relates to a device such a cartridge dispenser, cartridges, syringes, bait boxes or a collapsible tube containing the ready-to-use gel of the present invention.

In the ready-to-use gel according to the present invention, the filler material frequently contains a hydrophobic component, in particular a fat or oil or a mixture thereof with an alkanol or polyol as mentioned above. The amount of the hydrophobic component is as given above and is in particular from 1 to 50 % by weight more preferably from 3 to 30% by weight of the ready-to-use gel.

The ready-to-use gel is particularly suitable for combating insects which are prone to populate the habitat of human beings or farm animals. The ready-to-use gel is particularly useful for combating insects from the orders hymenoptera, blattodea, isoptera, diptera and lepidoptera, in particular for combating blattelidae and/or blattidae.

In another embodiment of the present invention, the composition is in the form of a water dilutable gel or solid, in particular a water dilutable gel. The gel can be easily diluted with water, thereby obtaining a virtually homogeneous aqueous spray broth, wherein the active ingredient is uniformly distributed.

Such a water dilutable gel or solid usually comprises at least one surfactant in the amounts given above, in order to stabilize the uniform distribution of the pesticide compound in the dilution.

Preferably, the water dilutable gel also contains at least one acid, more preferably at least one organic carboxylic acid as mentioned above, e.g. a carboxylic acid selected from the group of citric acid, malic acid, pyruvic acid and glycolic acid. The amount of carboxylic acid is preferably from 0.1 to 5% by weight of the water dilutable gel or solid.

Preferably, the water dilutable gel does contain only small amounts or even no fatty components as defined herein. In particular the amount of fatty components will not exceed 3 % by weight of the water dilutable gel. In the water dilutable gel, the attractant preferably comprises at least one feeding stimulant from the group of fruit, fruit juice, fruit extract or fruit juice extract, mono- or disaccharides, hydrogenated mono or disaccharides and water soluble protein sources such as protein hydrolysates or yeast autolysates. The water dilutable gel does may of course also contain one or more semiochemicals.

The water dilutable gels are particularly used for combating plant damaging pests, in particular sucking piercing or chewing insects, e. g. insects of the orders hymenoptera, isoptera, diptera, coleoptera and Lepidoptera, in particular for combating insects of the orders diptera and coleoptera.

The compositions of the present invention can be easily prepared by routine methods of formulation techniques.

Generally, the filler and optionally water is pre-charged in a mixing apparatus and the conventional formulation of the pesticide compound is added and the components are mixed. Further ingredients of the compositions may be added thereafter. The superabsorbent polymer can be added at any stage of this procedure. Preferably, the filler, at least a part of the water and the superabsorbent polymer is pre-charged and the formulation of the pesticide compound is added thereto with mixing. Optionally further water and further components such as the acid, dyes or pigments are added thereafter.

Then, the components are homogenized to obtain a gel formulation. Thereafter, the gel formulation is packaged or, in the case of a ready-to-use gel may be confectioned, e.g. in a suitable device for direct application or a cartridge for a device for direct application.

As mentioned above, the compositions of the present invention are useful for combating arthropod pests, in particular insects. Therefore, the present invention also relates to a method for combating arthropod pests which method comprises applying the composition of the present invention to a locus, where the arthropod pests gets into contact with the composition.

When the composition is in the form of a ready-to-use gel, the composition is applied directly to a locus, where the pest is likely to occur and thus gets into contact with the gel composition. For example, the ready-to-use gel can be injected by means of a suitable device such as a syringe or cartridge injector, into hatcheries or brood nests of the pest to be controlled or applied to places, where the pest to be controlled is likely to travel around such as parts of buildings, e.g. the floor of rooms where the pest is likely to occur (kitchen, storage room for food stuffs), ventilation and supply ducts, but also to parts of plants to be protected against damage by said pests. In particular the compositions can be applied to areas where pests accumulate or reproduce such as rubbish bins, garbage dumpsters, refuse areas, land fill sites etc. It is also possible to load a bait box or bait station or a liner with the ready-to-use gel and place to bait box or bait station or liner, where the pest to be controlled is likely to occur or accumulate, e.g. on the grounds where the pest to be controlled travel around or near the plants or goods to be protected against infestation and damaging by the pest to be controlled.

In case of the water-dilutable gels or solids, the composition is applied as an aqueous dilution, i.e. the composition will be diluted with water to obtain a sprayable aqueous liquid which contains the active ingredient (the aqueous liquid obtained by dilution is also termed as aqueous spray broth or aqueous dilution). The amount of water (on a volume base) which is used for diluting the composition is usually at least 1 time, frequently ate least 5 times, preferably at least 10 times, more preferably at least 50 times, in particular at least 100 times of the volume of the composition. The amount of water naturally depends on the desired concentration of the active ingredient in the aqueous spray broth which on its part depends on the active ingredient and the pest to be controlled in an known manner. However, it should be taken into account, that in most cases the compositions of the present invention provides an increased activity and thus allows a reduction of the application rate. Frequently, the composition of the present invention allows a reduction of the application rate by at least 20%, in particular at least 50% of the application rate which is necessary when using a conventional formulation. In general, the pesticide concentration in the aqueous dilution will range from 1 to 3000 mg/L, in particular 10 to 2000 mg/L.

The aqueous spray broth which is obtained by dilution of a water-dispersible gel or solid will be generally used to protect growing plants from attack or infestation by plant damaging pests, in particular plant damaging insects. In order to achieve control, the aqueous spray broth is applied to a locus where the arthropod pest gets into contact with

said composition. Usually, the aqueous spray broth is applied to the habitat of the pest to be controlled, which may be the plant or parts of the plant itself such as stem, root and foliage, or the soil surrounding the plants to be controlled. Preferably, the aqueous dilution is applied to parts of plants to be protected. However, it is also possible to apply the aqueous spray broth to the breeding ground of the pest to be controlled.

The compositions of the present invention can also be used for protecting non-living goods, in particular wooden materials such as board, fences, sleepers, etc. and buildings such as houses, outhouses, factories, construction materials, furniture, leather, natural or synthetic fibers, plastic articles, isolation of electric wires and cables from pests are likely to damage theses materials such as ants and termites. The compositions can also be used for controlling ants and termites from doing harm to crops or human beings (e. g. when the pests invade into houses and public facilities). In order to achieve effective control, the composition can be applied either directly or as an aqueous spray liquor. The composition can be applied directly but it also can be applied to the surrounding soil surface or into the under-floor soil in order to achieve effective protection of the material.

The present invention is now illustrated in further detail by the following working examples:

I. Starting materials

Superabsorbent Polymer SAP1: Powder of a crosslinked copolymer of potassium acrylate and acrylamide having a water absorbtion capacity for DI water of 400 g/g and particle size below 0.3 mm (Aquasorb 3005 S, of SNF FLOERGER, Andrézieux, France).

Superabsorbent Polymer SAP2: Powder of a crosslinked copolymer of potassium acrylate and acrylic acid having a water absorbtion capacity for DI water of 240 g/g and particle size below 0.1 mm (Luqasorb® 1010 of BASF Aktiengesellschaft Germany).

Pesticide formulation P1: Suspension concentrate of $\alpha$-cypermethrin, containing 100 g/L of $\alpha$-cypermethrin, 5.2 g/L of surfactant, 5.72 g/L of of xanthan gum, 1.04 g/L of defoamer, 0.2 g/L of tetrabutylammonium bromide, 0.2 g/L of phosphoric acid, 1.54 g/L of biocide, 154.4 g/L of propylene glycol and water ad 100% by weight.

Pesticide formulation P2: Aqueous suspension concentrate, containing 240 g/L of metaflumizone, 10.8 g/L of an co-(ethyleneoxid/propylenoxid)polymer (EO/PO-polymer), 97.4 g of a surfactant mixture, 54.1 g/L of propylene glycol, 5.4 g/L of a defoamer, 1.1 g/l of a biocide, 1.7 g/L of xanthan gum and water ad 1 L.

Pesticide formulation P3: Aqueous suspension concentrate, containing compound P5a, a surfactant mixture, thickener a biocide, defoamer and water ad 1 L.

Pesticide formulation P4: Powder, containing about 75% by weight of compound P5a, 11 % by weight of a surfactant mixture and 24% by weight of Kaolin clay.

Pesticide formulation P5: dilutable concentrate, containing about 25% by weight of compound P5a, 45% by weight of propylene carbonate and 30% by weight of an EO/PO-block copolymer.

Pesticide formulation P6: microemulsion concentrate, containing compound P5, a surfactant mixture, mixture of hydrocarbons and water.

Commercial cucurbitacin containing composition: aqueous melon juice extract, containing also mono- and disaccharides (Invite, available from Florida Food Products USA).

Commercial red grape juice, containing 162 g/L of mono- and disaccharides.

Attractant composition AtC 1: corn gluten hydrolysate containing 44% by weight of hydrolyzed corn gluten and 56% by weight of inert ingredients: Nu-Lure (available from Miller Chemicals and Fertilizer Corp. PA USA.)

Attractant composition AtC 2: Food grade yeast autolysate derived from brewers yeast: Yeast Autolysate SPA 400 (available from Halcyons Proteins Pty Ltd. Australia).

Attractant composition AtC 3: Protein hydrolyzate: Buminal (available from Bayer AG).

Attractant composition AtC 4: Tert-butyl 4-(or 5-)chloro-2-methylcyclohexane carboxylate: Capilure (available from Oecos Herfordshire UK Company).

Attractant composition AtC 5: Methyleugenol, purity > 95 % (available from Bronson & Jacobs Pty Ltd. Australia).

Fatty Chemical: Mixture of 5-25% b. w. of glycerine, 5-25%, b. w. of propylene glycol, 5-25% b. w. of hexylene glycol, 5-25% b. w. of oleic acid, 5-20% b. w. of corn oil, 5-20% b. w. of rapeseed oil, 5-20% b. w. of linseed oil and 5-20% b. w. of soy bean oil.

Gelling agent: Polyacrylate thickener (Carbopol EZ-2, Novenon Ohio USA).

II. Preparation Examples

1.1 Preparation of a ready-to-use gel (general recipe for formulations 1.a to 1.e)

a) About 22 to 32 g of deionized water were charged in a mixing vessel. Then, successively 0.75 g of gelling agent 1, 17.0 g of light brown sugar and 8.0 g of a commercial mixture of gluco-mannitol and gluco-sorbitol (Isomalt) were slowly added and the mixture was stirred until the components are dissolved. Then, 17.8 g of corn starch, 0.5 g of peanut butter flavor, 2.5 g of freeze-tried chicken liver powder and 2.5 g of freeze-dried cricket powder were added and the mixture was stirred until the solid material had been uniformly dispersed in the liquid vehicle. Then, 0.2 g of a commercial preservative (Proxel GXL) and the superabsorbent polymer powder (SAP) was added and the mixture was stirred until the material was homogeneously distributed in the liquid vehicle. Then propylene glycol or an oil were added (amounts given in table 1) and the mixture was stirred until a virtually homogeneous gel was obtained.

b) 50 g of diethyleneglycol n-butylether were pre-charged in a second mixing vessel. With stirring, 5 g of technical fipronil (100%) was added and the mixture was stirred until fipronil was completely dissolved. Then, 1167 g of a 70% by weight aqueous solution of sorbitol was added with stirring. Then, 0.5 g of denatonium benzoate were added with stirring.

c) 12.2 g of the fipronil formulation obtained in step b) were added to the gel obtained in step a) and the mixture was stirred until a virtually homogeneous gel was obtained.

1.2 Preparation of a ready-to-use gel (general recipe for comparative formulations C1 and C2)

The comparative formulations were prepared as described for formulations 1.a to 1.e. However, no superabsorbent polymer was added. Instead, aqueous NaOH was added after the biozide had been added. Moreover Carrageenan was added after Isomalt had been added.

The composition of the gel formulations are given in table 1 (all amounts given as % by weight)

Table 1:

| | C1* | C2* | 1.a | 1.b | 1.c | 1.d | 1.e |
|---|---|---|---|---|---|---|---|
| Fipronil | 0.05 | 0.05 | 0.05 | 0.05 | 0.05 | 0.05 | 0.05 |
| Gelling Agent | 0.75 | 0.75 | 0.75 | 0.75 | 0.75 | 0.75 | 0.75 |
| Light brown Sugar | 17.00 | 17.00 | 17.00 | 17.00 | 17.00 | 17.00 | 17.00 |
| Isomalt | 8.00 | 8.00 | 8.00 | 8.00 | 8.00 | 8.00 | 8.00 |
| Carrageenan | 1.00 | 1.00 | --- | --- | --- | --- | --- |
| Corn Starch | 17.80 | 17.80 | 17.80 | 17.80 | 17.80 | 17.80 | 17.80 |
| Peanut Butter Flavor | 0.50 | 0.50 | 0.50 | 0.50 | 0.50 | 0.50 | 0.50 |
| Chicken Liver Powder | 2.50 | 2.50 | 2.50 | 2.50 | 2.50 | 2.50 | 2.50 |
| Cricket Powder | 2.50 | 2.50 | 2.50 | 2.50 | 2.50 | 2.50 | 2.50 |
| Biocide | 0.20 | 0.20 | 0.20 | 0.20 | 0.20 | 0.20 | 0.20 |
| SAP 1 | --- | --- | 1.00 | 1.00 | 1.00 | 1.00 | --- |
| SAP 2 | --- | --- | --- | --- | --- | --- | 1.00 |
| NaOH | 0.27 | 0.27 | --- | --- | --- | --- | --- |
| Sorbitol (70% w/w) | 11.67 | 11.67 | 11.67 | 11.67 | 11.67 | 11.67 | 11.67 |
| Diethylene Glycol n-Butyl Ether | 0.50 | 0.50 | 0.50 | 0.50 | 0.50 | 0.50 | 0.50 |
| Denatonium Benzoate | 0.005 | 0.005 | 0.005 | 0.005 | 0.005 | 0.005 | 0.005 |
| Propylene Glycol | 5.00 | --- | --- | 15.00 | 10.00 | --- | 10.00 |
| Oleic Acid | --- | 5.00 | --- | --- | --- | --- | --- |
| Linseed Oil | --- | --- | 15.00 | --- | --- | --- | --- |
| Soybean Oil | --- | --- | --- | --- | --- | 15.00 | --- |

(continued)

| | C1* | C2* | 1.a | 1.b | 1.c | 1.d | 1.e |
|---|---|---|---|---|---|---|---|
| Water | ad 100 | ad 100 | ad 100 | ad 100 | ad 100 | ad 100 | ad 100 |
| * comparative examples | | | | | | | |

1.3 Preparation of a ready-to-use gel (general recipe for formulations 1.f to 1.m)

The formulations 1.f to 1.m were prepared as described for formulations 1.a to 1.e by using the pesticide formulations P3 to P6 and superabsorbent polymer

Table 1a:

| | 1.f | 1.g |
|---|---|---|
| Compound P5a | 0.125 | 0.125 |
| Surfactant | 0.018 | 0.018 |
| Kaolin | 0.023 | 0.023 |
| SAP 1 | 1.53 | 1.53 |
| Propylene glycol | 7.5 | 7.5 |
| Soy bean oil | 5.0 | -- |
| Maize oil | -- | 5.0 |
| Saccharose | 10.0 | 10.0 |
| Sorbitol | 10.0 | 10.0 |
| Lactose | 10.0 | 10.0 |
| Wheat flour | 10.0 | -- |
| Maize flour | -- | 10.0 |
| Peanut Butter Flavor | 1.0 | 1.0 |
| Chicken Liver Powder | 2.5 | 2.5 |
| Cricket Powder | 2.5 | 2.5 |
| Fish meal | 5.0 | 5.0 |
| Biocide | 0.2 | 0.2 |
| Denatonium Benzoate | 0.005 | 0.005 |
| Water | ad 100 | ad 100 |

Table 1b:

| | 1.h | 1.i |
|---|---|---|
| Compound P5a | 0.125 | 0.125 |
| Surfactant mixture | 0.3 | 0.3 |
| Hydrocarbon mixture | 0.1 | 0.1 |
| SAP1 | 1.53 | 1.53 |
| Propylene glycol | 7.5 | 7.5 |
| Soy bean oil | 5.0 | -- |
| Maize oil | -- | 5.0 |

(continued)

| | 1.h | 1.i |
|---|---|---|
| Saccharose | 10.0 | 10.0 |
| Sorbitol | 10.0 | 10.0 |
| Lactose | 10.0 | 10.0 |
| Wheat flour | 10.0 | -- |
| Maize flour | -- | 10.0 |
| Peanut Butter Flavor | 1.0 | 1.0 |
| Chicken Liver Powder | 2.5 | 2.5 |
| Cricket Powder | 2.5 | 2.5 |
| Fish meal | 5.0 | 5.0 |
| Biocide | 0.2 | 0.2 |
| Denatonium Benzoate | 0.005 | 0.005 |
| Water | ad 100 | ad 100 |

Table 1c:

| | 1.j | 1.k |
|---|---|---|
| Compound P5a | 0.125 | 0.125 |
| Surfactant mixture | 0.03 | 0.03 |
| defoamer | 0.001 | 0.001 |
| SAP 1 | 1.53 | 1.53 |
| Propylene glycol | 7.5 | 7.5 |
| Soy bean oil | 5.0 | -- |
| Maize oil | -- | 5.0 |
| Saccharose | 10.0 | 10.0 |
| Sorbitol | 10.0 | 10.0 |
| Lactose | 10.0 | 10.0 |
| Wheat flour | 10.0 | -- |
| Maize flour | -- | 10.0 |
| Peanut butter flavor | 1.0 | 1.0 |
| Chicken liver powder | 2.5 | 2.5 |
| Cricket powder | 2.5 | 2.5 |
| Fish meal | 5.0 | 5.0 |
| Biocide | 0.2 | 0.2 |
| Denatonium benzoate | 0.005 | 0.005 |
| Water | ad 100 | ad 100 |

Table 1d:

| | 1.l | 1.m |
|---|---|---|
| Compound P5a | 0.125 | 0.125 |
| EO/PO blockcopolymer | 0.23 | 0.23 |
| Propylene carbonate | 0.17 | 0.17 |
| SAP 1 | 1.53 | 1.53 |
| Propylene glycol | 8.1 | 8.1 |
| Soy bean oil | 5.0 | -- |
| Maize oil | -- | 5.0 |
| Saccharose | 10.0 | 10.0 |
| Sorbitol | 10.0 | 10.0 |
| Lactose | 10.0 | 10.0 |
| Wheat flour | 10.0 | -- |
| Maize flour | -- | 10.0 |
| Peanut butter flavor | 1.0 | 1.0 |
| Chicken liver powder | 2.5 | 2.5 |
| Cricket powder | 2.5 | 2.5 |
| Fish meal | 5.0 | 5.0 |
| Biocide | 0.2 | 0.2 |
| Denatonium benzoate | 0.005 | 0.005 |
| Water | ad 100 | ad 100 |

2. Preparation of water dispersible gels

General recipe A

50 to 60 g of deionized water were charged into a mixing vessel. Then 0.2 g of a commercial preservative (Proxel GXL), 5 g of cane sugar, 5 g of red grape juice and 10 g of glycerin were added and the mixture was stirred until the components were completely dissolved. Then the pesticide formulation P1 was added and the mixture was stirred again until virtually homogeneous dispersion was obtained. Then 2 different attractant compositions were successively added and the mixture was stirred again until a virtually homogeneous dispersion was obtained. Superabsorbent polymer was slowly added and the mixture was stirred until a virtually homogenous gel was obtained.

The compositions of the obtained gels are given in table 2 (all amounts given as % by weight)

Table 2

| | 2.a | 2.b | 2.c | 2.d | 2.e | 2.f |
|---|---|---|---|---|---|---|
| $\alpha$-Cypermethrin | 0.50 | 0.50 | 0.50 | 0.50 | 0.50 | 0.50 |
| Propylene glycol | 0.78 | 0.78 | 0.78 | 0.78 | 0.78 | 0.78 |
| $H_3PO_4$ | 0.001 | 0.001 | 0.001 | 0.001 | 0.001 | 0.001 |
| Xanthan Gum | 0.03 | 0.03 | 0.03 | 0.03 | 0.03 | 0.03 |
| Defoamer | 0.005 | 0.005 | 0.005 | 0.005 | 0.005 | 0.005 |
| TBA | 0.001 | 0.001 | 0.001 | 0.001 | 0.001 | 0.001 |
| Surfactant | 0.03 | 0.03 | 0.03 | 0.03 | 0.03 | 0.03 |
| Cane Sugar | 5.0 | 5.0 | 5.0 | 5.0 | 5.0 | 5.0 |

(continued)

| | 2.a | 2.b | 2.c | 2.d | 2.e | 2.f |
|---|---|---|---|---|---|---|
| Grape Juice | 5.0 | 5.0 | 5.0 | 5.0 | 5.0 | 5.0 |
| Glycerin | 10.0 | 10.0 | 10.0 | 10.0 | 10.0 | 10.0 |
| Biocide | 0.20 | 0.2 | 0.2 | 0.2 | 0.2 | 0.2 |
| AtC 1 | 10.0 | 10.0 | -- | -- | -- | -- |
| AtC 2 | 10.0 | -- | 10.0 | -- | 10.0 | -- |
| AtC 3 | -- | 10.0 | -- | 10.0 | -- | 10.0 |
| AtC 4 | -- | -- | 10.0 | 10.0 | -- | -- |
| AtC 5 | -- | -- | -- | -- | 10.0 | 10.0 |
| SAP 1 | 2.50 | 3.33 | 2.00 | 2.50 | 2.00 | 2.50 |
| Water | ad 100 | ad 100 | ad 100 | ad 100 | ad 100 | ad 100 |

General recipe B

30 to 40 g of deionized water were charged into a mixing vessel. Then 0.2 g of a commercial preservative (Proxel GXL), 5 g of cane sugar, 5 g of red grape juice and 10 g of glycerin were added and the mixture was stirred until the components were completely dissolved. Then the pesticide formulation P2 was added and the mixture was stirred again until virtually homogeneous dispersion was obtained. Then 2 different attractant compositions were successively added and the mixture was stirred again until c until virtually homogeneous dispersion was obtained. Superabsorbent polymer was slowly added and the mixture was stirred until a virtually homogenous gel was obtained.

The compositions of the obtained gels are given in table 3 (all amounts given as % by weight).

Table 3

| | 3.a | 3.b | 3.c | 3.d | 3.e | 3.f |
|---|---|---|---|---|---|---|
| Metaflumizone | 5.00 | 5.00 | 5.00 | 5.00 | 5.00 | 5.00 |
| EO/PO-Polymer | 0.23 | 0.23 | 0.23 | 0.23 | 0.23 | 0.23 |
| Surfactant mixture | 2.02 | 2.02 | 2.02 | 2.02 | 2.02 | 2.02 |
| Propylene glycol | 1.13 | 1.13 | 1.13 | 1.13 | 1.13 | 1.13 |
| Defoamer | 0.11 | 0.11 | 0.11 | 0.11 | 0.11 | 0.11 |
| Xanthan Gum | 0.04 | 0.04 | 0.04 | 0.04 | 0.04 | 0.04 |
| Cane Sugar | 5.00 | 5.0 | 5.0 | 5.0 | 5.0 | 5.0 |
| Grape Juice | 5.00 | 5.0 | 5.0 | 5.0 | 5.0 | 5.0 |
| Glycerin | 10.0 | 10.0 | 10.0 | 10.0 | 10.0 | 10.0 |
| Biocide | 0.20 | 0.2 | 0.2 | 0.2 | 0.2 | 0.2 |
| AtC 1 | 10.0 | 10.0 | -- | -- | -- | -- |
| AtC 2 | 10.0 | -- | 10.0 | -- | 10.0 | -- |
| AtC 3 | -- | 10.0 | -- | 10.0 | -- | 10.0 |
| AtC 4 | -- | -- | 10.0 | 10.0 | -- | -- |
| AtC 5 | -- | -- | -- | -- | 10.0 | 10.0 |
| SAP 1 | 2.50 | 2.50 | 1.27 | 1.00 | 1.50 | 2.50 |
| Water | ad 100 | ad 100 | ad 100 | ad 100 | ad 100 | ad 100 |

General recipe C

Into a mixing vessel 68 g of a cucurbitacin containing composition (melon juice extract, Invite, see above) were added with stirring. Then, superabsorbent polymer and citric acid were successively added ant the mixture was stirred until a virtually homogenous gel was obtained. To the gel 9.7 or 4.9 g of the pesticide formulation P1 (or 13.6 or 6.8 g of the pesticide formulation P2) and 5 g of propylene glycol were added and the mixture was stirred until a virtually homogenous gel was obtained.

The compositions of the obtained gels are given in tables 4a and 4b

Table 4a

| | 4.a | 4.b |
|---|---|---|
| Metaflumizone | 3.00 | 1.50 |
| EO/PO-Polymer | 0.14 | 0.07 |
| Surfactant mixture | 0.90 | 0.46 |
| Propylene glycol | 5.68 | 5.34 |
| Defoamer | 0.07 | 0.035 |
| Xanthan Gum | 0.02 | 0.01 |
| Biocide | 0.014 | 0.007 |
| Melon Juice Extract | 68.0 | 68.0 |
| Citric Acid | 0.50 | 0.50 |
| SAP 1 | 2.00 | 2.00 |
| Water | ad 100 | ad 100 |

Table 4b

| | 5.a | 5.b |
|---|---|---|
| $\alpha$-Cypermethrin | 1.00 | 0.50 |
| Surfactant Mixture | 0.56 | 0.28 |
| Modified clay | 0.04 | 0.02 |
| Xanthan Gum | 0.02 | 0.01 |
| $H_3PO_4$ | 0.01 | 0.005 |
| Defoamer | 0.03 | 0.015 |
| Hydrocarbon Solvent | 1.42 | 0.71 |
| Biocide | 0.016 | 0.008 |
| Propylene glycol | 5.91 | 5.46 |
| SAP 1 | 2.00 | 2.00 |
| Melon Juice Extract | 68.0 | 68.0 |
| Citric Acid | 0.50 | 0.50 |
| Water | ad 100 | ad 100 |

III. Biological Tests

1. Activity against cockroach (compositions 1.a to 1.e)

Laboratory experiments were conducted to compare the efficacy of the ready to use gels described in 11.1 in

controlling adult males of the German cockroach, *Blattella germanica,* in the presence (choice test) of alternate food source.

The baits were aged in the laboratory for 1, 2 or 3 months, respectively, by the following procedure: About 0.03 g or the respective gel was applied by means of a multi-dose applicator to a VWR polystyrene weighing dish (size micro). The thus prepared bait dishes were placed on a tray and placed inside a bottom cabinet in the laboratory. The baits were maintained in constant darkness at about 22°C.

For bioassay, the roaches were starved for 24 hours (provided shelter and water, but not food) before the initiation of the test. Each treatment was replicated 3 times with 20 roaches per replicate. Plastic roach boxes with ventilated lids were used as test arenas. The top 3-4 cm of the arenas was treated with Vaseline and mineral oil to prevent roaches from escaping. Water was provided as needed. The cockroaches were placed in the boxes and starved for 24 hours prior to bait introduction. The weighing dishes containing about 0.03 grams of gel were placed into the boxes. The boxes were maintained at 22°C and observed daily for mortality of the cockroaches. Roach mortality was recorded daily and the dead individuals were removed. Results are shown in Tables 5a, 5b and 5c.

Table 5a: Gel activity against German cockroach, *Blattella germanica,* after aging for 1 month

| | Mean cumulative % mortality at days after treatment (DAT) | | | |
|---|---|---|---|---|
| Treatment1) | % a.i. | 1 DAT | 2 DAT | 3 DAT |
| C12) | 0.05 | 91.7 | 100.0 | - |
| C22) | 0.05 | 76.7 | 93.3 | 95.0 |
| 1.b | 0.05 | 80.0 | 93.3 | 98.3 |
| 1.c | 0.05 | 78.3 | 96.7 | 98.3 |
| 1.d | 0.05 | 63.3 | 100.0 | - |
| 1.e | 0.05 | 88.3 | 100.0 | - |
| Untreated | - | 0.0 | 0.0 | 0.0 |

1 Test was initiated 30 August 2004
2 Comparative formulations
3 % b.w. of fipronil in gel

Table 5b: Gel activity against German cockroach, *Blattella germanica,* after aging for 2 month

| | Mean cumulative % mortality at days after treatment (DAT) | | | | |
|---|---|---|---|---|---|
| Treatment1 | % ai3) | 1 DAT | 2 DAT | 3 DAT | 4 DAT |
| C12) | 0.05 | 85.0 | 96.7 | 98.3 | 100.0 |
| C22) | 0.05 | 73.3 | 90.0 | 98.3 | 100.0 |
| 1.b | 0.05 | 91.7 | 100.0 | - | - |
| 1.c | 0.05 | 100.0 | - | - | - |
| 1.d | 0.05 | 75.0 | 90.0 | 100.0 | - |
| 1.e | 0.05 | 100.0 | - | - | - |
| control | - | 0.0 | 0.0 | 0.0 | 0.0 |

1 Test was initiated 5 October 2004.
2 Comparative formulations
3 % b. w. of fipronil in gel

Table 5c: Gel activity against German cockroach, *Blattella germanica,* after aging for 3 month

| | Mean cumulative % mortality at days after treatment (DAT) | | | | |
|---|---|---|---|---|---|
| Treatment[1] | % ai[3)] | 1 DAT | 2 DAT | 3 DAT | 5 DAT |
| C1[2)] | 0.05 | 91.7 | 98.3 | 100.0 | - |
| C2[2)] | 0.05 | 83.3 | 93.3 | 98.3 | 100.0 |
| 1.b | 0.05 | 76.7 | 91.7 | 100.0 | - |
| 1.c | 0.05 | 96.7 | 98.3 | 100.0 | - |
| 1.e | 0.05 | 95.0 | 96.7 | 100.0 | - |
| control | - | 0.0 | 0.0 | 0.0 | 0.0 |

[1] Test was initiated 5 October 2004.
[2] Comparative formulations
[3] % b. w. of fipronil in gel

2. Olfactory response of *Bactrocera Oleae*

The olfactory responses of *B. oleae* adults to excised olive twigs sprayed with aqueous dilutions were determined by means of a wind tunnel olfactometer. The sprayed twigs were transferred into the wind tunnel olfactometer and the responses of adult olive flies to them was scored.

The formulations were applied as aqueous dilutions. Formulations 2.a to 2.f and 3.a to 3.f were diluted with water in a ratio 1:10 v/v. Formulation P1 was diluted with water in ratio 8.3:1000 v/v. Formulation P2 was diluted with water in ratio 34.7:1000 v/v. The dilutions were sprayed on two-year-old potted olive trees. Spray application was performed with a high volume back up sprayer and branches were sprayed to run off. After spraying the trees were transferred and maintained in a non heated greenhouse. Lateral windows of the green house remained open to ensure proper ventilation of the place. At certain time intervals after spraying (0, 3 and 7 days) twigs of the treated olive trees were cut off and transferred to the laboratory for the bioassays.

The bioassays were conducted in a Plexiglas wind tunnel olfactometer. The olfactometer is a rectangular cage (2m length × 0.6 m width × 0.6 m height) made of plexiglas and having on each of the two opposite small sides a cylindrical opening to permit airflow. The cylindrical openings are closed with a wire screen to prevent the flies from escaping from the olfactometer. Fresh air pulled is into the cage by an exhaust fan, (connected to the upwind opening of the cage) and passed outside through a flexible aluminium tube (connected to the downwind opening). The top side of the cage has two cylindrical openings with Plexiglas covers, located 15 cm from each end of the chamber to facilitate transfer of the flies and olive twigs inside the chamber. Inside the chamber and 25cm from the upwind end a cylindrical wire screen cage was placed (15 cm in diameter and 40 cm height). The sides of the cage were covered with Tungel Foot glue. Inside the wire screen cage, olive twigs sprayed with the tested products were placed. 4 or 5 olive twigs 10 to 20 cm long were vertically fixed in the middle of the wire screen cage.

The adult flies, which were used in the bioassays developed from egg through the adult inside olive fruits and maintained in wooden screen cages in the laboratory at 25±2°C and a photoperiod of 16:8 LD with a liquid diet (a mixture of water:sugar:yeast hydrolysate, 5:3:1). Twenty-four hours before the test, adult food was removed form the cages and the flies had access only to crystalline sugar and water. For each bioassay twenty adult olive flies (10 males and 10 females), 10 to 20 days old were used. The flies were first aspirated into a glass vial. The top of the vial was closed with a nylon mesh. Subsequently the vial with the flies was transferred to the insect release point in the down wind end of the wind tunnel. The flies were allowed to acclimate to the wind tunnel conditions for ten minutes before released from the bottle. During acclimation period the fan at the up wind end of the tunnel was operated.

For the bioassay 20 adult female and male flies 10 to 15 days old were transferred into the olfactometer chamber in the down wind end. Half an hour later the exhaust fan was started to pump air inside the chamber and push it through the wire screen with the sprayed olive twigs to the flies and through the end opening outside the laboratory room. Air velocity inside the chamber varied from 0.5 to 0.9 m/sec. The operation of the fan was adjusted through a time controller to switch on and off every 10 minutes. During the bioassay the room temperature varied from 26°C to 28°C and the relative humidity from 39 to 60%.

Twelve hours after transfer of the flies in the cages the number of the flies that responded to the sprayed olive twigs and trapped on the glued sides of the cage was scored. The percentage of the flies trapped on the sides of the cage was used as an index of the relative response of the flies to the different tested products. At the end of the bioassay the screen cage with olive branches was removed from the tunnel and the number of flies entrapped on the glue (i.e.

flies attracted to baited branches) was recorded. The sides of the tunnel, the wire mesh and the fan blades were thoroughly cleaned with ethanol and the room was properly aerated before the next bioassay. The flies' response to olive twigs sprayed with water was used as the control treatment.

The tests were performed 3-5 hours after spraying, 3 d after spraying and 7 d after spraying. The results are given in tables 6a, 6b and 6c.

Table 6a. Olfactory responses of adult flies of *Bactrocera oleae* to treated olive 3-5 hours after spraying (% response : Percentage of adult flies attracted to olive twigs sprayed with the tested products)

| Treatment | % response Mean ± Std. Error | Minimum | Maximum |
|---|---|---|---|
| P1* | 15.0 ± 2.0 | 10.0 | 20.0 |
| 2.a | 56.3 ± 6.9 | 40.0 | 70.0 |
| 2.b | 43.8 ± 3.1 | 35.0 | 50.0 |
| 2.c | 55.0 ± 4.6 | 45.0 | 65.0 |
| 2.d | 67.5 ± 4.3 | 55.0 | 75.0 |
| 2.e | 41.3 ± 5.2 | 30.0 | 50.0 |
| 2.f | 60.0 ± 4.6 | 50.0 | 70.0 |
| P2* | 15.0 ± 2.0 | 10.0 | 20.0 |
| 3.a | 55.0 ± 3.5 | 45.0 | 60.0 |
| 3.b | 51.3 ± 7.5 | 35.0 | 70.0 |
| 3.c | 52.5 ± 3.2 | 45.0 | 60.0 |
| 3.d | 63.8 ± 6.3 | 50.0 | 80.0 |
| 3.e | 61.3 ± 4.3 | 50.0 | 70.0 |
| 3.f | 43.8 ± 6.8 | 30.0 | 60.0 |
| Control | 16.3 ± 1.3 | 15.0 | 20.0 |
| * Comparative formulations | | | |

Table 6b. Olfactory responses of adult flies of *Bactrocera oleae* to treated olive 3 d after spraying (% response: Percentage of adult flies attracted to olive twigs sprayed with the tested products)

| Treatment | % response Mean ± Std. Error | Minimum | Maximum |
|---|---|---|---|
| P1* | 13.8 ± 2.4 | 10.0 | 20.0 |
| 2.a | 33.8 ± 2.4 | 30.0 | 40.0 |
| 2.b | 41.3 ± 3.1 | 35.0 | 50.0 |
| 2.c | 52.5 ± 4.8 | 45.0 | 65.0 |
| 2.d | 63.8 ± 5.5 | 50.0 | 75.0 |
| 2.e | 25.0 ± 2.0 | 20.0 | 30.0 |
| 2.f | 22.5 ± 4.8 | 10.0 | 30.0 |
| P2* | 16.3 ± 1.3 | 15.0 | 20.0 |
| 3.a | 27.5 ± 7.2 | 10.0 | 45.0 |
| 3.b | 40.0 ± 2.0 | 35.0 | 45.0 |
| 3.c | 31.3 ± 3.1 | 25.0 | 40.0 |
| 3.d | 47.5 ± 3.2 | 40.0 | 55.0 |

(continued)

| Treatment | % response Mean ± Std. Error | Minimum | Maximum |
|---|---|---|---|
| 3.e | 33.8 ± 2.4 | 30.0 | 40.0 |
| 3.f | 37.5 ± 4.8 | 30.0 | 50.0 |
| Control | 17.5 ± 2.5 | 15.0 | 25.0 |
| * Comparative formulations | | | |

Table 6c. Olfactory responses of adult flies of *Bactrocera oleae* to treated olive 7 d after spraying (% response: Percentage of adult flies attracted to olive twigs sprayed with the tested products)

| Treatment | % response Mean ± Std. Error | Minimum | Maximum |
|---|---|---|---|
| P1* | 13.8 ± 2.4 | 10.0 | 20.0 |
| 2.a | 30.0 ± 2.0 | 25.0 | 35.0 |
| 2.b | 31.3 ± 3.1 | 25.0 | 40.0 |
| 2.c | 38.8 ± 3.1 | 30.0 | 45.0 |
| 2.d | 42.5 ± 6.6 | 30.0 | 60.0 |
| 2.e | 23.8 ± 2.4 | 20.0 | 30.0 |
| 2.f | 27.5 ± 3.2 | 20.0 | 35.0 |
| P2* | 13.8 ± 2.4 | 10.0 | 20.0 |
| 3.a | 35.0 ± 3.5 | 25.0 | 40.0 |
| 3.b | 28.8 ± 2.4 | 25.0 | 35.0 |
| 3.c | 28.8 ± 2.4 | 25.0 | 35.0 |
| 3.d | 25.0 ± 2.0 | 20.0 | 30.0 |
| 3.e | 27.5 ± 1.4 | 25.0 | 30.0 |
| 3.f | 22.5 ± 4.3 | 10.0 | 30.0 |
| Control | 17.5 ± 3.2 | 10.0 | 25.0 |
| * Comparative formulations | | | |

3. Activity against *Ceratitis capitata*

The composition to be tested was diluted with 10 times of water (on a volume base). 1 ml of the obtained dilution was applied (in the C and D trials 0,5 mL were applied) at a concentration of 25% on a circle of filter paper (diameter 9 cm). The treated circle was placed on a petri dish. 5 individuals of *Ceratitis capitata* were placed in each. The Petri dishes were closed and the mortality was registered at T+1, T+6, T+24 and T+48 h, with 4 replications. This trial was made four times. The age of the flies was 2 days except in the A trial where it was 4 days. The results are given in tables 7a to 7d.

Table 7a: trial A

| **composition** | **T+1** | **T+2** | **T+3** | **T+4** | **T+24** |
|---|---|---|---|---|---|
| 3.e | 25 | 26 | 25 | 35 | 55 |
| 3.f | 10 | 20 | 55 | 60 | 80 |
| 2.a | 10 | 10 | 40 | 75 | 80 |
| 2.c | 10 | 40 | 55 | 65 | 75 |

(continued)

| composition | T+1 | T+2 | T+3 | T+4 | T+24 |
|---|---|---|---|---|---|
| 2.d | 25 | 40 | 60 | 60 | 75 |
| 2.e | 15 | 56 | 50 | 50 | 95 |
| 2.f | 10 | 30 | 50 | 60 | 80 |

Table 7b: trial B

| composition | T+1 | T+2 | T+3 | T+4 | T+24 |
|---|---|---|---|---|---|
| 3.e | 6 | 10 | 20 | 30 | 35 |
| 3.f | 6 | 16 | 30 | 36 | 65 |
| 2.a | 6 | 10 | 40 | 46 | 65 |
| 2.b | 6 | 6 | 0 | 6 | 15 |
| 2.c | 10 | 16 | 20 | 20 | 35 |
| 2.d | 16 | 16 | 36 | 36 | 50 |
| 2.e | 16 | 20 | 30 | 36 | 65 |
| 2.f | 16 | 26 | 40 | 40 | 85 |

Table 7c: trial C

| composition | T+1 | T+2 | T+3 | T+4 | T+6 |
|---|---|---|---|---|---|
| 3.c | 0 | 0 | 0 | 26 | 90 |
| 3.d | 0 | 0 | 0 | 26 | 100 |
| 3.e | 0 | 10 | 10 | 96 | 100 |
| 3.f | 0 | 6 | 16 | 80 | 96 |
| 2.a | 10 | 26 | 36 | 60 | 90 |
| 2.b | 6 | 46 | 50 | 70 | 96 |
| 2.c | 10 | 20 | 30 | 40 | 90 |
| 2.d | 30 | 36 | 40 | 66 | 76 |
| 2.e | 36 | 50 | 56 | 46 | 96 |
| 2.f | 66 | 96 | 86 | 90 | 100 |

Table 7d: trial D

| composition | T+1 | T+2 | T+3 | T+4 | T+24 |
|---|---|---|---|---|---|
| 3.a | 6 | 10 | 20 | 26 | 75 |
| 3.b | 6 | 16 | 16 | 16 | 45 |
| 3.c | 20 | 20 | 20 | 16 | 66 |
| 3.d | 6 | 6 | 10 | 16 | 70 |
| 3.e | 10 | 26 | 36 | 30 | 76 |
| 3.f | 16 | 16 | 36 | 26 | 75 |
| 2.a | 36 | 46 | 80 | 96 | 65 |

(continued)

| composition | T+1 | T+2 | T+3 | T+4 | T+24 |
|---|---|---|---|---|---|
| 2.b | 46 | 60 | 76 | 76 | 100 |
| 2.c | 50 | 46 | 66 | 70 | 100 |
| 2.d | 20 | 40 | 56 | 70 | 100 |
| 2.e | 6 | 46 | 56 | 76 | 95 |
| 2.f | 30 | 56 | 76 | 90 | 100 |

4. Activity against adults of *Diabrotica virgifera*

The tests were run as field trials in separate allotments of 12 m x 200 m containing an appropriate number of corn plants (closeness of planting about 80,000 to 90,000 plants per hectare). The plants showed an average infestation with diabrotica adults. Aqueous spray liquors were prepared by diluting 1 L of the respective formulation with 34 L ofwater. Plants were sprayed with an aqueous spray liquor at an application rate of 35 1/ha. Application was done at the VT-stage of the corn plants (tassel stage). The number of surviving diabrotica individuals were counted at 2 days after treatment (DAT) and 7 DAT and compared with the number of diabrotica individuals at that time in the untreated control allotment. From these numbers efficacies were calculated by Abbot's formula:

$$E = 100 \times (1 - x/y)$$

x = number of insect individuals in the treated allotment
y = number of insect individuals in the untreated control allotment

The application rates of the active ingredient and the results are given in the following table 8.

Table 8:

| Composition | Active ingredient | Application rate g/ha1) | Efficacy 2 DAT [%] | Efficacy 7 DAT [%] |
|---|---|---|---|---|
| P2 | metaflumizone | 240 | 90-95 | 90-95 |
| 4.a | metaflumizone | 15 | 75-80 | 90-95 |
| 4.b | metaflumizone | 30 | 85-90 | 90-95 |
| 5.a | α-cypermethrin | 5 | 90-95 | 90-95 |
| 5.b | α-cypermethrin | 10 | 85-90 | 85-90 |
| 1) amount of active ingredient per hectare | | | | |

5. Activity against cockroach (compositions 1.f to 1.m)

Laboratory experiments were conducted to compare the efficacy of the ready to use gels described in II.1.2 in controlling adult males of the German cockroach, *Blattella germanica,* in the presence (choice test) of alternate food source.

The baits were aged in the laboratory for 1, 2, 3 or 4 weeks, respectively, by the following procedure: About 0.5 g or the respective gel was applied by means of a multi-dose applicator to a VWR polystyrene weighing dish (size micro). The thus prepared bait dishes were placed on a tray and placed inside a bottom cabinet in the laboratory. The baits were maintained in constant darkness at about 22°C.

For bioassay, the roaches were starved for 24 hours (provided shelter and water, but not food) before the initiation of the test. Each treatment was replicated 3 times with 5 roaches per replicate. Disposable plastic containers were used as test arenas. The top 3-4 cm of the arenas was treated with Vaseline and mineral oil to prevent roaches from escaping. The containers were provided with a water-soaked cotton dental wick. The cockroaches were placed in the boxes and starved for 24 hours prior to bait introduction. The weighing dishes containing about 0.5 grams of gel were placed into the boxes. The boxes were maintained at 22°C and observed daily for mortality of the cockroaches. Roach mortality was recorded after 4 h and 1 day and the dead individuals were removed. Results are shown in tables

9a, 9b, 9c and 9d.

Table 9a: Without ageing

| | Mean cumulative % mortality at days after treatment (h AT or DAT) | | |
|---|---|---|---|
| Treatment[1] | % ai[3)] | 4 h AT | 1 DAT |
| 1.f | 0.125 | 0.0 | 100 |
| 1.g | 0.125 | 13.3 | 100 |
| 1.h | 0.125 | 13.3 | 100 |
| 1.i | 0.125 | 13.3 | 100 |
| 1.j | 0.125 | 13.3 | 100 |
| 1.k | 0.125 | 33.3 | 93.3 |
| 1.l | 0.125 | 33.3 | 100 |
| 1.m | 0.125 | 26.7 | 100 |
| control | - | 0.0 | 0.0 |

[1] Test was initiated September 20, 2006.
[2] Comparative formulations
[3] % b. w. of compound P5a in gel

Table 9b: After 1 week ageing

| | Mean cumulative % mortality at days after treatment (h AT or DAT) | | |
|---|---|---|---|
| Treatment[1] | % ai[3)] | 4 h AT | 1 DAT |
| 1.f | 0.125 | 0.0 | 100 |
| 1.g | 0.125 | 0.0 | 100 |
| 1.h | 0.125 | 6.7 | 93.3 |
| 1.i | 0.125 | 6.7 | 100 |
| 1.j | 0.125 | 0.0 | 100 |
| 1.k | 0.125 | 6.7 | 100 |
| 1.l | 0.125 | 60.0 | 100 |
| 1.m | 0.125 | 40.0 | 100 |
| control | - | 0.0 | 0.0 |

[1] Test was initiated September 20, 2006.
[2] Comparative formulations
[3] % b. w. of compound P5a in gel

Table 9c: After 3 week ageing

| | Mean cumulative % mortality at days after treatment (h AT or DAT) | | |
|---|---|---|---|
| Treatment[1] | % ai[3)] | 4 h AT | 1 DAT |
| 1.f | 0.125 | 0.0 | 100 |
| 1.g | 0.125 | 0.0 | 100 |
| 1.h | 0.125 | 6.7 | 100 |
| 1.i | 0.125 | 13.3 | 100 |

(continued)

| | Mean cumulative % mortality at days after treatment (h AT or DAT) | | |
|---|---|---|---|
| Treatment[1] | % ai[3)] | 4 h AT | 1 DAT |
| 1.j | 0.125 | 6.7 | 100 |
| 1.k | 0.125 | 0.0 | 100 |
| 1.l | 0.125 | 73.3 | 100 |
| 1.m | 0.125 | 60.0 | 100 |
| control | - | 0.0 | 0.0 |

[1] Test was initiated September 20, 2006.
[2] Comparative formulations
[3] % b. w. of compound P5a in gel

Table 9d: After 4 week ageing

| | Mean cumulative % mortality at days after treatment (h AT or DAT) | | |
|---|---|---|---|
| Treatment[1] | % ai[3)] | 4 h AT | 1 DAT |
| 1.f | 0.125 | 0.0 | 100 |
| 1.g | 0.125 | 0.0 | 100 |
| 1.h | 0.125 | 13.3 | 100 |
| 1.i | 0.125 | 6.7 | 100 |
| 1.j | 0.125 | 0.0 | 100 |
| 1.k | 0.125 | 0.0 | 100 |
| 1.l | 0.125 | 80.0 | 93.3 |
| 1.m | 0.125 | 53.3 | 100 |
| control | - | 0.0 | 0.0 |

[1] Test was initiated September 20, 2006.
[2] Comparative formulations
[3] % b. w. of compound P5a in gel

## Claims

**1.** Pesticide composition in the form of of a ready to use gel which contains

i) 0.02 to 5% by weight of at least one pesticide compound which is effective against arthropod pest,
ii) 0.5 to 5% by weight of at least one superabsorbent polymer P having an absorption capacity for deionised water of at least 100 g per 1 g of polymer P, and
iii) 20 to 79.5% by weight of at least one filler material different from water, and
iv) 15 to 74.5% by weight of water,
wherein the % by weight are based on the total weight of the composition and wherein the filler material comprise a hydrophobic component, which is selected from natural oils and fats, fatty acids, fatty alcohols and mixtures thereof, and where the filler also comprises an attractant.

**2.** The composition as claimed in claim 1, wherein the filler material comprises a feed stimulant.

**3.** The composition as claimed in claim 2, wherein the feeding stimulant comprises at least one edible carbohydrate and/or at least one edible hydrogenated carbohydrate.

**4.** The composition as claimed in any of the preceding claims, wherein the superabsorbent polymer P is a crosslinked copolymer of ethylenically unsaturated monomers M, comprising at least 90% by weight, based of the total weight of monomers M, of at least one monoethylenically unsaturated carboxylic acid CA.

**5.** The composition as claimed in claim 4, wherein the monomers M comprise at least 90% by weight, based of the total weight of monomers M, of at least one monoethylenically unsaturated carboxylic acid CA, or of a mixture of at least one monoethylenically unsaturated carboxylic acid CA or a salt thereof and at least one amide of a monoethylenically unsaturated acid AM.

**6.** The composition as claimed in claim 5, wherein the monomers M comprise at least 90% by weight, based of the total weight of monomers M, of a mixture of acrylic acid, or an alkali metal salt thereof and acrylamide.

**7.** The composition as claimed in claim 4, wherein the monomers M comprise at least 90% by weight, based of the total weight of monomers M, of a mixture of acrylic acid and an alkali metal salt of acrylic acid.

**8.** The composition as claimed in any of the preceding claims, wherein the at least one pesticide compound is selected from the group of

- growth regulators,
- nicotinoid insecticides,
- organo(thio)phosphates,
- carbamates,
- pyrethroids,
- GABA antagonist compounds,
- macrocyclic lactone insecticides,
- mitochondrial complex I electron transport inhibitors,
- mitochondrial complex III electron transport inhibitors,
- uncoupler compounds,
- oxidative phosphorylation inhibitor compounds,
- moulting disruptor compounds,
- mixed function oxidase inhibitor compounds,
- sodium channel blocker compounds,
- compounds of the formula P5

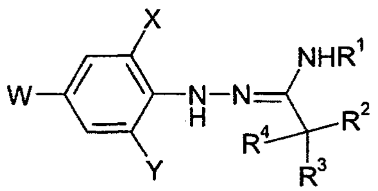

P5

wherein X and Y are each independently halogen,
W is halogen or $C_1$-$C_2$-haloalkyl
$R^1$ is $C_1$-$C_6$-alkyl, $C_2$-$C_6$-alkenyl, $C_2$-$C_6$-alkynyl, $C_1$-$C_4$-alkoxy-$C_1$-$C_4$-alkyl or $C_3$-$C_6$-cycloalkyl each of which may be substituted with 1, 2, 3, 4 or 5 halogen atoms
$R^2$ and $R^3$ are $C_1$-$C_6$-alkyl or together with the adjacent carbon atom may form a $C_3$-$C_6$-cycloalkyl moiety which may carry 1, 2 or 3 halogen atoms and
$R^4$ is hydrogen or $C_1$-$C_6$-alkyl;

and the agriculturally acceptable salts thereof,
- anthranilamide compounds of formula P6

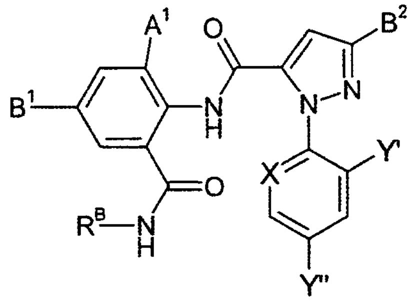

P6

,

wherein $A^1$ is $CH_3$, Cl, Br, I, X is C-H, C-Cl, C-F or N, Y' is F, Cl, or Br, Y" is F, Cl, or $CF_3$, $B^1$ is hydrogen, Cl, Br, I, CN, $B^2$ is Cl, Br, $CF_3$, $OCH_2CF_3$, $OCF_2H$, and $R^B$ is hydrogen, $CH_3$ or $CH(CH_3)_2$;

benclothiaz, bifenazate, cartap, flonicamid, pyridalyl, pymetrozine, sulfur, thiocyclam, flubendiamide, cyenopyrafen, flupyrazofos, cyflumetofen, amidoflumet, 1-acetyl-2-oxo-3-(pyridin-3-ylmethyl)amino-6-heptafluorpropyl-1,2,3,4-tetrahydroquinazoline and malodinitrile compounds.

**9.** The non therapeutic use of a composition as claimed in any of the preceding claims for combating arthropod pests.

**10.** A non therapeutic method for combating arthropod pests, which comprises applying a composition as defined in any of claims 1 to 8 directly to a location where the arthropod pest gets into contact with said composition.

**11.** The method as claimed in claim 10, where the arthropod pest is an insect selected from orders hymenoptera, blattodea, isoptera, diptera and lepidoptera.

**12.** The method as claimed in any of claims 10 or 11, where the location to which the composition is applied are parts of buildings.

**13.** A device containing a ready-to-use gel composition as defined in claim 1.

## Patentansprüche

**1.** Pestizidzusammensetzung in der Form eines verwendungsfertigen Gels, die

i) 0,02 bis 5 Gew.-% an wenigstens einer Pestizidverbindung, die gegen Arthropoden-Schädlinge wirksam ist,
ii) 0,5 bis 5 Gew.-% an wenigstens einem superabsorbierenden Polymer P mit einer Absorptionskapazität für entionisiertes Wasser von wenigstens 100 g pro 1 g Polymer P und
iii) 20 bis 79,5 Gew.-% an wenigstens einem von Wasser verschiedenen Füllstoffmaterial und
iv) 15 bis 74,5 Gew.-% Wasser
enthält, wobei die Gew.-%-Werte auf das Gesamtgewicht der Zusammensetzung bezogen sind und wobei das Füllstoffmaterial eine hydrophobe Komponente umfasst, die ausgewählt ist aus natürlichen Ölen und Fetten, Fettsäuren, Fettalkoholen und Gemischen davon, und wobei der Füllstoff auch einen Lockstoff umfasst.

**2.** Zusammensetzung gemäß Anspruch 1, wobei das Füllstoffmaterial ein Fressstimulans umfasst.

**3.** Zusammensetzung gemäß Anspruch 2, wobei das Fressstimulans wenigstens ein verzehrbares Kohlenhydrat und/ oder wenigstens ein verzehrbares hydriertes Kohlenhydrat umfasst.

**4.** Zusammensetzung gemäß einem der vorstehenden Ansprüche, wobei das superabsorbierende Polymer P ein vernetztes Copolymer von ethylenisch nichtgesättigten Monomeren M ist, umfassend wenigstens 90 Gew.-%, bezogen auf das Gesamtgewicht der Monomere M, an wenigstens einer monoethylenisch nichtgesättigten Carbonsäure CA.

**5.** Zusammensetzung gemäß Anspruch 4, wobei die Monomere M wenigstens 90 Gew.-%, bezogen auf das Gesamtgewicht der Monomere M, an wenigstens einer monoethylenisch nichtgesättigten Carbonsäure CA oder einem Gemisch von wenigstens einer monoethylenisch nichtgesättigten Carbonsäure CA oder einem Salz davon und wenigstens einem Amid einer monoethylenisch nichtgesättigten Säure AM umfassen.

**6.** Zusammensetzung gemäß Anspruch 5, wobei die Monomere M wenigstens 90 Gew.-%, bezogen auf das Gesamtgewicht der Monomere M, an einem Gemisch von Acrylsäure oder einem Alkalimetallsalz davon und Acrylamid umfassen.

**7.** Zusammensetzung gemäß Anspruch 4, wobei die Monomere M wenigstens 90 Gew.-%, bezogen auf das Gesamtgewicht der Monomere M, an einem Gemisch von Acrylsäure und einem Alkalimetallsalz von Acrylsäure umfassen.

**8.** Zusammensetzung gemäß einem der vorstehenden Ansprüche, wobei die wenigstens eine Pestizidverbindung ausgewählt ist aus der Gruppe von

- Wachstumsregulatoren,
- Nikotinoid-Insektiziden,
- Organo(thio)phosphaten,
- Carbamaten,
- Pyrethroiden,
- GABA-Antagonistverbindungen,
- makrozyklischen Lacton-Insektiziden,
- mitochondrialer-Komplex-I-Elektronentransporthemmern,
- mitochondrialer-Komplex-III-Elektronentransporthemmern,
- Entkopplerverbindungen,
- oxidativer-Phosphorylierungshemmer-Verbindungen,
- häutungsstörenden Verbindungen,
- gemischte-Funktion-Oxidasehemmer-Verbindungen,
- Natriumkanalblocker-Verbindungen,
- Verbindungen der Formel P5

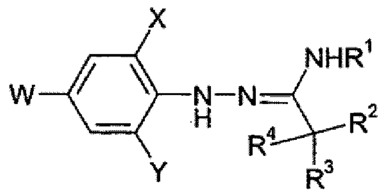

P5

wobei X und Y jeweils unabhängig Halogen sind,
W Halogen oder $C_1$-$C_2$-Halogenalkyl ist,
$R^1$ $C_1$-$C_6$-Alkyl, $C_2$-$C_6$-Alkenyl, $C_2$-$C_6$-Alkinyl, $C_1$-$C_4$-Alkoxy-$C_1$-$C_4$-alkyl oder $C_3$-$C_6$-Cycloalkyl ist, von denen jedes mit 1, 2, 3, 4 oder 5 Halogenatomen substituiert sein kann,
$R^2$ und $R^3$ $C_1$-$C_6$-Alkyl sind oder zusammen mit dem benachbarten Kohlenstoffatom eine $C_3$-$C_6$-Cycloalkyleinheit bilden können, die 1, 2 oder 3 Halogenatome tragen kann, und
$R^4$ Wasserstoff oder $C_1$-$C_6$-Alkyl ist;

und landwirtschaftlich verträgliche Salze davon,
- Anthranilamidverbindungen der Formel P6

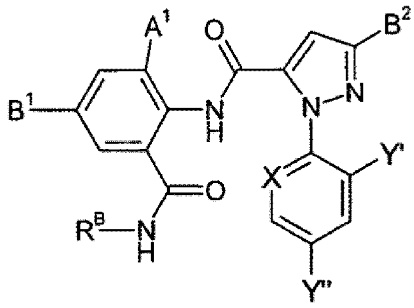

P6

wobei $A^1$ $CH_3$, Cl, Br, I ist, X C-H, C-Cl, C-F oder N ist, Y' F, Cl oder Br ist, Y" F, Cl oder $CF_3$ ist, $B^1$ Wasserstoff, Cl, Br, I, CN ist, $B^2$ Cl, Br, $CF_3$, $OCH_2CF_3$, $OCF_2H$ ist und $R^B$ Wasserstoff, $CH_3$ oder $CH(CH_3)_2$ ist;

Benclothiaz, Bifenazat, Cartap, Flonicamid, Pyridalyl, Pymetrozin, Schwefel, Thiocyclam, Flubendiamid, Cyenopyrafen, Flupyrazofos, Cyflumetofen, Amidoflumet, 1-Acetyl-2-oxo-3-(pyridin-3-ylmethyl)amino-6-heptafluorpropyl-1,2,3,4-tetrahydrochinazolin und Malodinitrilverbindungen.

**9.** Nichttherapeutische Verwendung einer Zusammensetzung gemäß einem der vorstehenden Ansprüche zum Bekämpfen von Arthropoden-Schädlingen.

**10.** Nichttherapeutisches Verfahren zum Bekämpfen von Arthropoden-Schädlingen, umfassend das Aufbringen einer Zusammensetzung gemäß einem der Ansprüche 1 bis 8 direkt auf einen Ort, an dem der Arthropoden-Schädling in Kontakt mit der Zusammensetzung kommt.

**11.** Verfahren gemäß Anspruch 10, wobei der Arthropoden-Schädling ein Insekt ist ausgewählt aus den Ordnungen Hymenoptera, Blattodea, Iosptera, Diptera und Lepidoptera.

**12.** Verfahren gemäß einem der Ansprüche 10 oder 11, wobei es sich bei dem Ort, auf den die Zusammensetzung aufgebracht wird, um Teile von Gebäuden handelt.

**13.** Einheit, die eine verwendungsfertige Gelzusammensetzung gemäß Anspruch 1 enthält.

## Revendications

**1.** Composition pesticide sous la forme d'un gel prêt à l'emploi contenant

i) de 0,02 à 5% en poids d'au moins un composé pesticide qui est efficace contre des arthropodes nuisibles,
ii) de 0,5 à 5% en poids d'au moins un polymère super-absorbant P ayant une capacité d'absorption vis-à-vis de l'eau désionisée d'au moins 100 g pour 1 g de polymère P, et
iii) de 20 à 79,5% en poids d'au moins un matériau de remplissage différent de l'eau, et
iv) de 15 à 74,5% en poids d'eau,
où les pourcentages en poids sont basés sur le poids total de la composition et où le matériau de remplissage comprend un composant hydrophobe, qui est choisi parmi les huiles et les matières grasses naturelles, les acides gras, les alcools gras et des mélanges de ceux-ci, et où le remplissage comprend également un attractif.

**2.** Composition selon la revendication 1, dans laquelle le matériau de remplissage comprend un stimulant alimentaire.

**3.** Composition selon la revendication 2, dans laquelle le stimulant alimentaire comprend au moins un glucide comestible et/ou au moins un glucide hydrogéné comestible.

**4.** Composition selon l'une quelconque des revendications précédentes, dans laquelle le polymère super-absorbant P est un copolymère réticulé de monomères éthyléniquement insaturés M, comprenant au moins 90% en poids, sur la base du poids total des monomères M, d'au moins un acide carboxylique monoéthyléniquement insaturé CA.

**5.** Composition selon la revendication 4, dans laquelle les monomères M comprennent au moins 90% en poids, sur la base du poids total des monomères M, d'au moins un acide carboxylique monoéthyléniquement insaturé CA, ou d'un mélange d'au moins un acide carboxylique monoéthyléniquement insaturé CA ou d'un sel de celui-ci et d'au moins un amide d'un acide monoéthyléniquement insaturé AM.

**6.** Composition selon la revendication 5, dans laquelle les monomères M comprennent au moins 90% en poids, sur la base du poids total des monomères M, d'un mélange d'acide acrylique, ou d'un sel de métal alcalin de celui-ci et d'acrylamide.

**7.** Composition selon la revendication 4, dans laquelle les monomères M comprennent au moins 90% en poids, sur la base du poids total des monomères M, d'un mélange d'acide acrylique, ou d'un sel de métal alcalin d'acide acrylique.

**8.** Composition selon l'une quelconque des revendications précédentes, dans laquelle le au moins un composé pesticide est choisi dans le groupe constitué par

- les substances de croissance,
- les insecticides à base de néonicotinoïdes,
- les organo(thio)phosphates,
- les carbamates,
- les pyréthrinoïdes,
- les composés antagonistes du GABA,
- les insecticides à base de lactone macrocyclique,
- les inhibiteurs de la chaîne respiratoire mitochondriale du complexe I,
- les inhibiteurs de la chaîne respiratoire mitochondriale du complexe III,
- les composés de découplage,
- les composés d'inhibition de la phosphorylation oxydative,
- les composés perturbateurs de mue,
- les composés d'inhibition d'oxydase de fonction mixte,
- les composés bloquant les canaux sodiques,
- les composés de formule P5

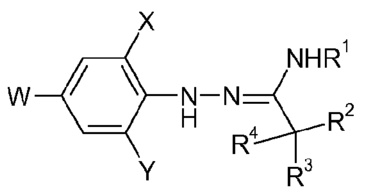

P5

dans laquelle X et Y sont chacun indépendamment halogène,
W est halogène ou $C_1$-$C_2$-halogénoalkyle,
$R^1$ est $C_1$-$C_6$-alkyle, $C_2$-$C_6$-alcényle, $C_2$-$C_6$-alcynyle, $C_1$-$C_4$-alcoxy-$C_1$-$C_4$-alkyle ou $C_3$-$C_6$-cycloalkyle, chacun d'entre eux pouvant être substitué par 1, 2, 3, 4 ou 5 atomes d'halogène,
$R^2$ et $R^3$ sont $C_1$-$C_6$-alkyle ou, conjointement avec l'atome de carbone adjacent, peuvent former un motif $C_3$-$C_6$-cycloalkyle pouvant porter 1, 2 ou 3 atomes d'halogène, et
$R^4$ est hydrogène ou $C_1$-$C_6$-alkyle ;

et les sels de celui-ci acceptables sur le plan agricole,
- les composés à base d'anthranilamide de formule P6

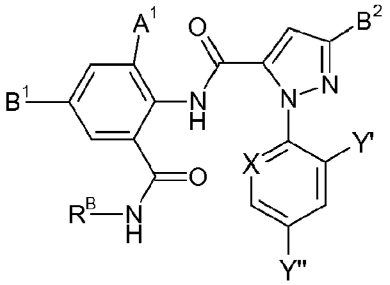

P6

,

dans laquelle $A^1$ est $CH_3$, Cl, Br, I, X est C-H, C-Cl, C-F ou N, Y' est F, Cl ou Br, Y" est F, Cl ou $CF_3$, $B^1$ est hydrogène, Cl, Br, I, CN, $B^2$ est Cl, Br, $CF_3$, $OCH_2CF_3$, $OCF_2H$, et $R^B$ est hydrogène, $CH_3$ ou $CH(CH_3)_2$ ;
le benclothiaz, le bifénazate, le cartap, le flonicamide, le pyridalyle, la pymétrozine, le soufre, le thiocyclam, le flubendiamide, le cyénopyrafène, le flupyrazophos, le cyflumétofène, l'amidoflumet, la 1-acétyl-2-oxo-3-(pyridin-3-ylméthyl)amino-6-heptafluoro-propyl-1,2,3,4-tétrahydroquinazoline et les composés à base de malodinitrile.

**9.** Utilisation non thérapeutique d'une composition selon l'une quelconque des revendications précédentes, pour lutter contre des arthropodes nuisibles.

**10.** Méthode non thérapeutique de lutte contre des arthropodes nuisibles, comprenant l'application d'une composition telle que définie selon l'une quelconque des revendications 1 à 8 directement à un emplacement où l'arthropode nuisible entre en contact avec ladite composition.

**11.** Méthode selon la revendication 10, dans laquelle l'arthropode nuisible est un insecte choisi parmi les ordres *Hymenoptera, Blattodea, Isoptera, Diptera* et *Lepidoptera.*

**12.** Méthode selon l'une quelconque des revendications 10 ou 11, dans laquelle l'emplacement auquel la composition est appliquée est constitué de parties de bâtiments.

**13.** Dispositif contenant une composition de gel prête à l'emploi telle que définie selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9107972 A
- WO 9711602 A
- WO 2006055275 A
- WO 8912450 A
- DE 10124297
- DE 10157350
- JP 2002284608 A
- WO 0289579 A
- WO 0290320 A
- WO 0290321 A
- WO 0406677 A
- WO 0420399 A
- JP 2004099597 A
- WO 9828279 A
- EP 454621 A
- WO 9828277 A
- EP 462456 A
- US 4822779 A
- JP 2002193709 B
- WO 0100614 A
- WO 9845274 A
- US 6335357 B
- US 6221890 B
- JP 21010907 B
- WO 03007717 A
- WO 03007718 A
- WO 04080180 A
- EP 604798 A
- WO 0170671 A
- WO 0248137 A
- WO 0324222 A
- WO 0315518 A
- WO 0467528 A
- WO 0433468 A
- WO 05118552 A
- EP 993337 A
- US 4417992 A
- US 3669103 A
- WO 0125493 A


### Non-patent literature cited in the description


- The Pesticide Manual. British Crop Protection Council, 2003
- Agro Project. PJB Publications Ltd, November 2004
- Farm Chemicals Handbook. Meister Publishing Company, 2001, vol. 88
- *Pesticide Science,* 1988, vol. 54, 237-243
- **F. L. BUCHHOLZ et al.** Modern Superabsorbent Polymer Technology. Wiley-VCH, 1998, 153
- **F. L. BUCHHOLZ et al.** *loc. cit.,* 154
- **F. L. BUCHHOLZ et al.** *loc. cit.,* 11-14
- **F.L. BUCHHOLZ.** *loc. cit.,* 97-103
- **T.D. WYATT ; SMELL ; TASTE.** Pheromones and Animal Behaviour: Communication. Cambridge University Press, 2003
- McCutcheon's Detergents and Emulsifiers Annual. MC Publishing Corp, 1981
- **H. STACHE.** Tensid-Taschenbuch. C. Hanser, 1981
- **M. ; J. ASH.** Encyclopedia of Surfactants. Chemical Publishing Co, 1980, vol. I-III